# EUROPÄISCHE PATENTSCHRIFT

(11) **EP 3 695 158 B1**
(45) Veröffentlichungstag und Bekanntmachung des Hinweises auf die Patenterteilung: **21.10.2026**
(21) Anmeldenummer: 18789019.9
(22) Anmeldetag: 09.10.2018
(51) Int. Cl.: F16P 3/14, B21D 55/00, B27G 19/00, B27G 19/02

(54) **SICHERHEITSEINRICHTUNG FÜR WERKZEUGMASCHINEN**
SAFETY DEVICE FOR MACHINE TOOLS
DISPOSITIF DE SÉCURITÉ POUR MACHINE-OUTILS

(30) Priorität: 12.10.2017 DE 202017106201 U
(43) Veröffentlichungstag der Anmeldung: 19.08.2020
(73) Patentinhaber: Wilhelm Altendorf GmbH & Co. KG, 32429 Minden (DE)
(72) Erfinder: SCHRÖDER, Karl-Friedrich, 32429 Minden (DE)
(74) Vertreter: Eisenführ Speiser
(86) Internationale Anmeldenummer: PCT/EP2018/077411
(87) Internationale Veröffentlichungsnummer: WO 2019/072808

(56) Entgegenhaltungen:
- EP-A2- 2 233 818
- DE-A1- 102007 062 951
- DE-A1- 102007 062 996
- DE-A1- 102009 034 891
- DE-A1- 102009 054 491
- DE-U1- 202014 100 411
- JP-A- H09 303 685

## Beschreibung

Die Erfindung betrifft eine Sicherheitseinrichtung für Werkzeugmaschinen mit einem Bearbeitungswerkzeug, das zur Bearbeitung eines der Werkzeugmaschine zugeführten Werkstücks dient, umfassend eine Erkennungsvorrichtung, die ausgebildet ist, um eine Gefährdungssituation eines Bedieners der Werkzeugmaschine zu erkennen, eine Gefahrreduktionsvorrichtung, die signaltechnisch mit der Erkennungsvorrichtung verbunden und ausgebildet ist, um bei Erhalt eines Gefährdungssignals von der Erkennungsvorrichtung, das eine Gefährdungssituation des Bedieners signalisiert, eine Maßnahme zur Verringerung der Gefährdungssituation auszuführen.

Grundsätzlich geht von Werkzeugmaschinen mit einem Bearbeitungswerkzeug eine Gefährdung des Bedieners aus. Je nach Art der Werkzeugmaschine kann diese Gefährdung sich in unterschiedlicher Weise darstellen. Beispielsweise kann bei weitestgehend automatisiert arbeitenden Werkzeugmaschinen (NC oder CNC-Werkzeugmaschinen) die Gefährdung insbesondere bei der Einrichtung eines Bearbeitungsvorgangs auftreten. Bei Werkzeugmaschinen, die einen geringeren Automatisierungsgrad haben, kann die Gefährdung des Benutzers hingegen bei dem eigentlichen Bearbeitungsvorgang auftreten, beispielsweise, weil der Bearbeiter das Werkstück oder das Bearbeitungswerkzeug manuell führen bzw. bedienen muss oder eine maschinenunterstützte, manuelle Führung oder Bedienung durchführen muss.

Ein typisches Beispiel für Werkzeugmaschinen die eine solche Gefährdungssituation für den Bediener hervorrufen können, sind Kreissägen wie beispielsweise Formatkreissägen. Bei solchen Formatkreissägen wird das Werkstück vom Bediener während des Schnittvorgangs geführt, sodass bei unsachgemäßer Bedienung die Hände des Bedieners in den Bereich des Kreissägeblatts geraten können und dadurch Verletzungen hervorgerufen werden können.

Es sind im Stand der Technik verschiedene Ansätze bekannt, die darauf abzielen, eine solche Gefährdung zu vermeiden oder zumindest zu verringern. Aus EP 1 273 097 B1 ist eine Bremsvorrichtung vorbekannt, die dazu dient, um ein Kreissägeblatt innerhalb kürzester Zeit abzubremsen und somit eine Gefährdung des Bedieners zu vermeiden. Diese Bremsvorrichtung stellt im Sinne der vorliegenden Erfindung eine Gefahrreduktionsvorrichtung dar, die eine Bremsung beziehungsweise einen vollständigen Stopp der Bewegung des Bearbeitungswerkzeugs bewirkt und hierdurch die Verletzungsgefahr vermeiden soll. Problematisch bei dieser Art der Sicherheitseinrichtung ist einerseits die Gefahr der Beschädigung des Bearbeitungswerkzeugs oder von damit verbundenen Bauteilen durch den Bremsvorgang, da eine solche Beschädigung möglicherweise den Ersatz des Bearbeitungswerkzeugs notwendig macht und damit erhebliche Folgekosten verursacht. Für eine solche Art einer Gefahrreduktionsvorrichtung ist daher eine besonders präzise Erkennungsvorrichtung beizuordnen um zu vermeiden, dass Fehlauslösungen der Gefahrreduktionsvorrichtung stattfinden. Es kann erwartet werden, dass Sicherheitsvorrichtungen, die mehrfach kostspielige Fehlauslösungen verursachen, keine Akzeptanz beim Benutzer finden. Damit zusammenhängend entsteht jedoch die Problematik, dass eine Gefährdungssituation auf sehr unterschiedliche Art und Weisen auftreten kann und eine sichere, fehlerfreie Erkennung einer Gefährdungssituation in Abgrenzung zu einer Nichtgefährdungssituation im Stand der Technik nicht gewährleistet wird, sodass Fehlauslösungen auftreten können.

Aus DE 20 2010 004458 ist eine Schutzhaube vorbekannt, die mittels unterschiedlicher Sensorik eine Handerkennung durchführen kann. Dieser Stand der Technik stellt eine Erkennungsvorrichtung dar, die dazu vorgesehen ist, die Hand eines Benutzers zu erkennen, um hierdurch zu einer Gefährdungssituation führende Annährungen der Hand an das Bearbeitungswerkzeug zu bestimmen. Problematisch an dieser Art von Erkennungsvorrichtung ist die notwendige Anordnung an der Schutzhaube, die ein bewegliches und im Rahmen der Bearbeitung auch bewegtes Bauteil einer Formatkreissäge darstellt und hierdurch die Genauigkeit der Bestimmung der Gefährdungssituation nachteilig beeinträchtigt. Aufgrund der hierdurch notwendigen, einzuplanenden Toleranzen bei der Bestimmung der Gefährdungssituation müssen somit auch Handpositionen des Benutzers, die noch keine Gefährdungssituation darstellen, jedoch auf Grund der Toleranzen in dem Bereich einer Gefährdungssituation liegen, als Auslösekriterium für die Gefahrreduktionsvorrichtung verwendet werden. Dies führt aus Sicht des Benutzers ebenfalls zu Fehlauslösungen und macht das System daher für die effiziente und wirtschaftliche Arbeit mit der Werkzeugmaschine weniger attraktiv.

Aus DE 20 2009 007 060, DE 20 2011 101 666, DE 20 2017 103 019 und DE 20 2009 009 757 sind weitere Sicherheitseinrichtungen für Formatkreissägen bekannt, die im Bereich der Erkennung einer Gefährdungssituation und der Maßnahme zur Verringerung der Gefahrensituation Vorteile aufweisen, jedoch auch aus Gründen der bereitzustellenden Sicherheit Beeinträchtigungen bei der wirtschaftlichen und effizienten Werkstückbearbeitung mit der Werkzeugmaschine verursachen.

Aus DE 20 2014 100 411 U1 ist eine Sicherheitseinrichtung für Werker im Arbeitsbereich von Industrierobotern vorbekannt. Der Werker trägt eine Erfassungseinrichtung, die eine Kommunikationsverbindung zu einer Auswerte- und Steuereinrichtung herstellt. Durch Abgleich der mittels dieser Kommunikationsverbindung ermittelten Position des Werkers und einem Gefahrenbereich des Industrierobotors wird eine Gefahrensituation erkannt und dann ein Nothalt des Robotors ausgelöst. Nachteilig ist hierbei, dass eine Datenkommunikationsverbindung zwischen der benutzergetragenen Etrfassungseinrichtung und der Auswerte- und Steuerungseinrichtung bestehen muss, um die Position des Werkers zu ermitteln.

Aus DE 10 2015 204 938 A1 ist ein tragbares Sicherungsgerät zum Schutze für Mensch und Maschine vorbekannt. Auch bei diese m Sicherungsgerät muss der Mensch eine Erfassungseinrichtung tragen, welche eine beispielsweise mittels WLAN, oder RFID hergestellte Kommunikation mit einer Auswerteeinrichtung hat, um den Standort des Menschen und eine daraus ermittelte Gefahrensituation zu erkennen. Bei Ausfall dieser Kommunikation kann ein Gefahrenzustand nicht erkannt werden.

Aus DE 10 2010 026 812 A1 ist eine Sicherheitseinrichtung für eine Kreissäge vorbekannt, welche anhand eines Vergleichs eines Musters in einem als Gefahrenbereich eingestuften Nahbereich um das Kreissägeblatt mit einem Muster eines Kleidungsstücks eines Benutzers eine Gefahrensituation erkennt und das Sägeblatt bei einer solchen Gefahrensituation schlagartig stillsetzt. Nachteilig an diesem Stand der Technik ist, dass einerseits durch das schlagartige Stillsetzen eine Verletzung bei schnellen Bewegungen des Benutzers nicht vollständig vermieden werden kann, wenn der Nahbereich nicht ausreichend groß gewählt wird und andererseits ein Arbeiten im Nahbereich nicht möglich ist.

Aus US 2002/0170399A1 ist eine weitere Sicherheitsvorrichtung für Kreissägen bekannt. Bei dieser Sicherheitsvorrichtung wird eine durch Annäherung von einem Körperteil an das Sägeblatt und Kontakt mit dem Sägeblatt sich ändernde Kapazität erfasst und bei einer solchen Kapazitätsänderung das Sägeblatt mittels einer Wippenkonstruktion abgesenkt. Nachteilig an dieser Sicherheitsvorrichtung ist, dass die kapazitive Messung eine Gefahrensituation erst bei sehr kurzer Annäherung oder gar Kontakt des Körperteils mit dem Sägeblatt erfassen kann und die Absenkung des Sägeblatts aufgrund von Massenträgheiten nicht rasch genug erfolgen kann, um bei schnellen Bewegungen des Körperteils eine Verletzung zuverlässig zu vermeiden. DE60307960T2 und DE602004005115T2 offenbaren Bewegungsgeschwindigkeitmessungen, jedoch nicht eine vom Benutzer getragene Signalisierungseinheit.

Der Erfindung liegt die Aufgabe zu Grunde, eine Sicherheitsvorrichtung bereitzustellen, die es dem Benutzer ermöglicht, bei Aufrechterhaltung der wirtschaftlichen und effizienten Bearbeitung des Werkstücks mit der Werkzeugmaschine eine wesentliche Reduktion der Gefahr einer Verletzung während der Arbeit an der Werkzeugmaschine zu erreichen. Diese Aufgabe wird erfindungsgemäß mit einer Sicherheitseinrichtung nach Anspruch 1 gelöst.

Die erfindungsgemäße Sicherheitseinrichtung umfasst zunächst grundsätzlich eine Erkennungsvorrichtung und eine Gefahrreduktionsvorrichtung. Die Erkennungsvorrichtung dient dazu, um eine Gefährdungssituation zu erkennen. Eine solche Gefährdungssituation ist erfindungsgemäß grundsätzlich darin zu sehen, dass sich ein Körperteil eines Bedieners in eine Position begibt, in der es durch die Werkzeugmaschine, typischerweise durch das Bearbeitungswerkzeug der Werkzeugmaschine, verletzt werden kann. So kann beispielsweise eine solche Verletzung durch einen Bohrer einer Bohrmaschine, einen Fräser einer Fräsmaschine oder ein Sägeblatt einer Sägemaschine auftreten, aber auch durch das rotierende Spannfutter einer Drehmaschine, bei der das Bearbeitungswerkzeug keine Schnittbewegung ausführt. Die Gefährdungssituation, die von der Erkennungsvorrichtung erkannt wird, muss dabei in Form einer Prognose, also Vorhersage einer auftretenden Verletzung erfolgen, also zu einem Zeitpunkt, zu dem noch keine Verletzung erfolgt ist, jedoch eine zukünftige Verletzung mit so hoher Wahrscheinlichkeit auftritt, dass eine Maßnahme zu deren Vermeidung durch die Sicherheitseinrichtung getroffen werden muss. Grundsätzlich wird angestrebt, dass die Erkennungsvorrichtung die Gefährdungssituation sowohl mit einer hohen Prognosewahrscheinlichkeit als auch sehr frühzeitig, also mit möglichst großem zeitlichen Abstand von der prognostizierten Verletzung, erkennt, um der Gefahrreduktionsvorrichtung möglichst viel Zeit zu geben, eine geeignete Maßnahme zur Reduktion oder Vermeidung der Gefährdung durchzuführen. Die Erkennungsvorrichtung kann dabei auf unterschiedliche Signale zurückgreifen, die sie erkennt bzw. durch Verarbeitung ermittelt. Zum einen kann die Erkennungsvorrichtung den Abstand zwischen dem gefährdeten Körperteil und dem die Gefährdung auslösenden Bauteil der Werkzeugmaschine, insbesondere dem Bearbeitungswerkzeug, erfassen und bei Unterschreitung eines Mindestabstandes feststellen, dass eine Gefährdungssituation vorliegt. Alternativ, insbesondere aber ergänzend hierzu, kann auch die Geschwindigkeit des Körperteils, ggf. in Kombination mit einer Bewegungsgeschwindigkeit des die Gefährdung auslösenden Bauteils der Werkzeugmaschine oder als Relativgeschwindigkeit als Kriterium herangezogen werden, um eine Gefährdungssituation möglichst frühzeitig festzustellen. So kann beispielsweise bei einer untypisch hohen Bewegungsgeschwindigkeit des Körperteils oder einer untypisch hohen relativen Annährungsgeschwindigkeit zwischen Körperteil und Werkzeugmaschinenbauteil, die oberhalb einer Maximalgeschwindigkeit liegt, festgestellt werden, dass eine Gefährdungssituation vorliegt. Insbesondere kann aus einer Kombination des Abstandes und der Relativgeschwindigkeit zwischen einem Körperteil und einem Bauteil der Werkzeugmaschine eine Gefährdungssituation festgestellt werden. Weiterhin kann auch alternativ oder ergänzend eine Beschleunigung des Körperteils bzw. eine relative Beschleunigung zwischen Körperteil und Werkzeugmaschinenbauteil, das die Gefährdung auslöst, herangezogen werden, um zu bestimmen, ob eine Gefährdungssituation vorliegt. Hohe Beschleunigungen, die oberhalb eines Beschleunigungsgrenzwertes liegen, können somit, insbesondere in Verbindung mit einem Abstand und/ oder einer Geschwindigkeit als Beurteilungskriterium dienen, ob eine Gefährdungssituation vorliegt.

Die Erkennungsvorrichtung ist signaltechnisch mit einer Gefahrreduktionsvorrichtung gekoppelt. Bei Feststellung, dass eine Gefährdungssituation vorliegt, wird ein Signal an die Gefahrreduktionsvorrichtung gesendet. Die Gefahrreduktionsvorrichtung ist dazu ausgebildet, eine Maßnahme zur Verringerung des Gefährdungszustandes auszuführen. Grundsätzlich kann diese Maßnahme sehr unterschiedlich ausfallen. So kann beispielsweise die Bewegung des Werkzeugmaschinenbauteils, insbesondere des Bearbeitungswerkzeugs, gebremst oder gestoppt werden. Das Bauteil kann solcherart bewegt werden, dass die Gefährdungssituation vermieden wird, also aus dem kritischen Bereich zu dem Körperteil wegbewegt werden. Es kann eine Abschirmung erfolgen, die das Körperteil von dem Werkzeugmaschinenbauteil abschirmt oder aktiv das Körperteil weg schiebt.

Weiterhin kann die Verletzungsgefahr durch eine Entschärfung des Bearbeitungswerkzeugs reduziert werden. Diese Maßnahmen können einzeln oder miteinander kombiniert durchgeführt werden.

Grundsätzlich ist zu verstehen, dass die Sicherheitseinrichtung solcherart konfiguriert sein kann, dass die Erkennungsvorrichtung ausgebildet ist, um genau ein Gefährdungssignal an die Gefahrreduktionsvorrichtung zu senden, mit dem dann genau eine Maßnahme oder Maßnahmenkombination zur Reduktion oder Vermeidung der Gefährdungssituation durch die Gefahrreduktionsvorrichtung durchgeführt wird. Ebenso kann die Erkennungsvorrichtung aber auch dazu ausgebildet sein um zwei oder mehr unterschiedliche Gefährdungssignale an die Gefahrreduktionsvorrichtung zu senden, die einen unterschiedlichen Schweregrad der Gefährdungssituation charakterisieren und die Gefahrreduktionsvorrichtung kann dazu ausgebildet sein, um in Abhängigkeit dieser durch die Gefährdungssignale bezeichneten Gefährdungsschweregrade entsprechend unterschiedliche Maßnahmen oder Maßnahmenkombinationen zur Verringerung des Gefährdungszustandes auszuführen. So kann beispielsweise in einem ersten Schritt durch die Gefahrreduktionsvorrichtung lediglich ein Warnsignal an den Benutzer ausgegeben werden, bei Erhalt eines weiteren Gefährdungssignals kann die Geschwindigkeit des Bearbeitungswerkzeuges reduziert werden und bei Erhalt eines noch weiteren, die Gefährdungssituation in noch höherem Schweregrad bezeichnenden Gefährdungssignals kann das Bearbeitungswerkzeug vollständig gestoppt werden.

Die Erkennungsvorrichtung umfasst grundsätzlich mehrere Komponenten, nämlich mindestens eine Signalisierungseinheit, mindestens eine Signalempfangseinrichtung und mindestens eine Signalverarbeitungseinrichtung. Die Signalisierungseinheit ist vom Benutzer getragen, ist also solcherart ausgebildet, dass ein Benutzer sie mit sich führen kann, insbesondere an einem Körperteil befestigen kann. Hierdurch wird der Benutzer bzw. das Körperteil für die Signalempfangseinrichtung erkennbar und kann mit hoher Präzision räumlich bezüglich seiner Position erfasst werden. Je nach benötigter Auflösung für die entsprechende Werkzeugmaschine kann daher eine Signalisierungseinheit verwendet werden, die beispielsweise am Rumpf des Bedieners, am Arm des Bedieners, am Handgelenk des Bedieners oder an einem oder einzelnen Fingern des Bedieners getragen wird, um eine entsprechende Auflösung und differenzierte Positionserkennung des Körperteils zu erreichen.

Die Signalempfangseinrichtung ist dazu ausgebildet, um die Signalisierungseinheiten zu lokalisieren, also mindestens eine Positionskomponente der Signalisierungseinheit zu erfassen. Dabei ist zu verstehen, dass diese Positionskomponente eine relative Angabe der Position der Signalisierungseinheit in Bezug auf die Signalempfangseinrichtung in zumindest einer Richtung darstellt. Grundsätzlich kann auch bevorzugt die Signalempfangseinrichtung so ausgebildet sein, dass sie die relative Position der Signalisierungseinheit zu der Signalempfangseinrichtung oder zu einem virtuellen Bezugspunkt in dreidimensionaler Weise bestimmt, beispielsweise in einem XYZ- Koordinatensystem oder einem Polarkoordinatensystem oder sonstigen, geeigneten Koordinatensystemen. Die so ermittelte Positionskomponente oder Position übermittelt die Signalempfangseinrichtung an die Signalverarbeitungseinrichtung.

Die Signalverarbeitungseinrichtung ist dazu ausgebildet um aus dieser Positionskomponente bzw. Position zu ermitteln, ob eine Gefährdungssituation vorliegt. Hierzu kann die Signalverarbeitungseinrichtung in verschiedener Weise ausgeführt bzw. programmiert sein. So kann in einer einfachen Verarbeitungsweise der aus der Positionskomponente bzw. Position berechnete Abstand zwischen der Signalisierungseinheit und einem die Gefährdung auslösenden Bauteil wie dem Bearbeitungswerkzeug ermittelt werden und mit einem Mindestabstand verglichen werden, sodass dann, wenn dieser Mindestabstand durch den berechneten Abstand unterschritten wird, auf eine Gefährdungssituation geschlossen wird. Die Signalverarbeitungseinrichtung kann aber auch solcherart ausgeführt sein, dass sie aus aufeinanderfolgenden, von der Signalempfangseinrichtung empfangenen Positionskomponenten oder Positionen einen Verlauf der Positionskomponenten bzw. Positionen ermittelt, hieraus auf eine Bewegungsrichtung, ggf. auch eine Bewegungsgeschwindigkeit und weiter ggf. auch eine Bewegungsbeschleunigung der Signalisierungseinheit ermittelt und diese in die Ermittlung, ob eine Gefährdungssituation vorliegt, einbezieht. Die Signalverarbeitungseinrichtung kann weiterhin dazu ausgebildet sein, um geometrische Abhängigkeiten zwischen der Signalisierungseinheit und der Körpergeometrie zu berücksichtigen. Dies kann in einfacher Weise in solcherart ausgeführt sein, dass in der Signalverarbeitungseinrichtung für eine bestimmte Signalisierungseinheit, die anhand beispielsweise einer übermittelten Kodierung einem bestimmten Ort am Körper des Benutzers zugeordnet wird, ein geometrischer Kennwert zugeordnet wird, der die Kontur, der Körperteile, die von diesem Trageort der Signalisierungseinheit am Körper sich erstrecken, beschreiben. So kann beispielsweise eine am Handgelenk getragene Signalisierungseinheit mit einem geometrischem Reichweitenkennwert von der Signalverarbeitungseinrichtung verarbeitet werden, der die Länge vom Handgelenk bis zu den Fingerspitzen definiert, sodass ausgehend von der Position der Signalisierungseinheit auch eine Gefährdungssituation festgestellt wird, wenn sich die Signalisierungseinheit in einem solchen Abstand von dem Bauteil der Werkzeugmaschine befindet, der die Gefährdung auslöst, der unter Abzug des Abstandes der Signalisierungseinheit von der Fingerspitze den Mindestabstand unterschreitet. Weiterhin kann die Signalverarbeitungseinrichtung dazu ausgebildet sein, um die Positionskomponente unter Berücksichtigung von abgespeicherten biomechanischen Bewegungsmustern zu verarbeiten und dabei ermitteln, ob eine Gefährdungssituation vorliegt. So können typische Bewegungsmuster immer die durch Gelenke und Körperteilabmessungen definiert sind, bei der Bestimmung der Gefährdungssituation berücksichtigt werden, was zu einer präziseren Bestimmung einer Gefährdungssituation führt, da ausgehend von einer bestimmten Position der Signalisierungseinheit am Körperteil nur realistisch auftretende Bewegungsformen berücksichtigt werden.

Grundsätzlich kann die Signalverarbeitungseinrichtung ausgebildet sein, um Positions- und/oder Bewegungsdaten von Bauteilen der Werkzeugmaschine speichern für die Abstandsberechnung aufrufen oder solche Daten über eine Schnittstelle empfangen und entsprechend, vorzugsweise in Echtzeit verarbeiten.

Mit der erfindungsgemäßen Sicherheitseinrichtung wird es somit möglich, anhand einer Signalisierungseinheit, die vom Benutzer getragen wird, mit Hilfe der Signalempfangseinrichtung, die eine Positionskomponente oder mehrere Positionskomponenten ermittelt, welche eine relative Lage der Signalisierungseinheit zu der Signalempfangseinrichtung charakterisiert, die räumliche Position der Signalisierungseinheit zu erfassen und die genaue Position eines Körperteils zu bestimmen. Dabei beruht die Erfindung darauf, dass eine unverwechselbare und präzise Erfassung, der Position der Signalisierungseinheit durch die Signalempfangseinrichtung realisiert werden kann, die überlegen ist zu den im Stand der Technik bekannten Erkennungsvorrichtungen, welche eine direkte Erfassung des Körperteils anstreben. Durch die gezielte Signalverarbeitung der Relativposition der Signalisierungseinheit zu der Signalempfangseinrichtung wird eine Echtzeit- Datenverarbeitung ermöglicht, sodass Gefährdungssituationen in Echtzeit erfasst werden können und entsprechende Maßnahmen zur Gefahrreduktion oder Gefahrvermeidung rechtzeitig durchgeführt werden können.

Gemäß einer ersten Bevorzugten Ausführungsform ist vorgesehen, dass die Signalisierungseinheit eine aktiv sendende Einheit ist, die ausgebildet ist, um draht- und berührungslos ein Präsenzsignal an die Signalempfangseinrichtung zu senden.

Gemäß einer hierzu alternativen Ausführungsform ist vorgesehen, dass die Signalisierungseinheit eine passiv arbeitende Einheit ist, die ausgebildet ist, um draht- und berührungslos von der Signalempfangseinrichtung erfasst zu werden. Eine passiv arbeitende Einheit ist hierbei zu verstehen als eine Signalisierungseinheit, die in Bezug auf ihre Lage und/ oder Position von der Signalempfangseinrichtung erfasst werden kann, ihrerseits jedoch keine aktive Übermittlung von Lage- oder Positionsdaten an die Signalempfangseinrichtung durchführt. Der Vorteil einer solchen passiven Signalisierungseinheit liegt darin, dass sie in der Regel kompakter gebaut werden kann und auf eine eigene Energieversorgung verzichten kann.

Noch weiter ist es bevorzugt, dass die elektronische Signalverarbeitungseinrichtung ausgebildet ist, um zu bestimmen, dass die Gefährdungssituation vorliegt, wenn das Körperteil in einer aus der Positionskomponente berechneten aktuellen Position des Körperteils weniger als einen Mindestabstand von dem Bearbeitungswerkzeug entfernt ist, oder das Körperteil in einer aus der Positionskomponente berechneten aktuellen Position des Körperteils oberhalb des oder im Mindestabstand von dem Bearbeitungswerkzeug entfernt ist und aus einer aus der Änderung von zumindest zwei zeitlich aufeinanderfolgenden Positionskomponenten berechneten aktuellen Bewegung des Körperteils innerhalb einer vorbestimmten Zeitspanne in eine Position bewegen wird, die weniger als der Mindestabstand von dem Bearbeitungswerkzeug entfernt ist.

Gemäß dieser Ausführungsform kann die Gefährdungssituation anhand der Unterschreitung eines Mindestabstandes des Körperteils von dem Bearbeitungswerkzeug bestimmt werden, wobei dieser Mindestabstand ein Abstand in einer bestimmten Raumachse, unterschiedliche Mindestabstände entlang zwei oder drei unterschiedlichen Raumachsen oder ein absoluter Abstand von einem Punkt oder einer Umhüllungsfläche des Bearbeitungswerkzeugs sein kann. Insbesondere kann der Abstand als Mindestabstand von der Oberfläche des Bearbeitungswerkzeugs von der Signalverarbeitungseinrichtung berechnet werden. Die Signalverarbeitungseinheit berechnet dabei den Abstand aus von ihr gespeicherten oder an sie übermittelten Positionsdaten des Bearbeitungswerkzeugs. In einfachster Näherung kann hierbei als Position des Körperteils die Position der Signalisierungseinheit zugrunde gelegt werden, jedoch können auch anhand von in die Signalverarbeitungseinheit eingespeicherten körperbezogenen Daten die möglichen Positionen von Körperteilen, die benachbart zu der vom Benutzer getragenen Signalisierungseinheit angeordnet sind, bei der Berechnung des Gefährdungszustandes einbezogen werden.

Neben der Position wird dabei auch eine Bewegung des Körperteils beziehungsweise der Signalisierungseinheit berücksichtigt. Diese Bewegung wird als Geschwindigkeit in die Ermittlung, ob eine Gefährdungssituation vorliegt, einbezogen. Dabei kann in einfachster Näherung die Geschwindigkeit der Signalisierungseinheit selbst zugrunde gelegt werden, in einer Variante zur präziseren Bestimmung kann auch die Bewegungsgeschwindigkeit von zwei Signalisierungseinheiten, die beabstandet am Körper ein und desselben Benutzers getragen werden, in die Berechnung einbezogen werden, um hieraus eine genauere Bewegung eines Körperteils oder ggf. mit einer gelenkübergreifenden Beabstandung der zwei Signalisierungseinrichtungen unter Berücksichtigung einer Winkelbeschleunigung zu erzielen. Des Weiteren können bei der Bestimmung der Geschwindigkeit des Körperteils auch anatomische und geometrische Daten einbezogen werden, um von einer für die Signalisierungseinheit bestimmten Geschwindigkeit und Lageänderung auf eine Geschwindigkeit eines Körperteils rechnen zu können.

Noch weiter ist es bevorzugt, dass die Signalempfangseinrichtung ausgebildet ist, um draht- und berührungslos einen Abstand zwischen der Signalisierungseinheit und der Signalempfangseinrichtung zu erfassen. Durch eine draht- und berührungslose Abstandsmessung wird eine schnelle, in Echtzeit verarbeitbare Kenngröße ermittelt, die eine Gefährdungssituation charakterisieren kann und für die Ermittlung, ob eine solche Gefährdungssituation vorliegt, zugrunde gelegt werden kann.

Noch weiter ist es bevorzugt, dass die Signalempfangseinrichtung ausgebildet ist, um draht- und berührungslos eine sich von der Signalisierungseinheit zu der Signalempfangseinrichtung erstreckende Richtung oder Richtungskomponente zu erfassen. Gemäß dieser Fortbildungsform wird eine Richtung ermittelt, in der sich die Signalisierungseinheit ausgehend von einem Referenzpunkt, insbesondere einem durch die Signalempfangseinrichtung dargestellten Referenzpunkt befindet. Diese Richtung stellt eine alternative oder ergänzende Information, ob eine Gefährdungssituation vorliegt, dar. Insbesondere kann neben der absolut bestimmten Richtung auch durch eine Bestimmung durch eine Änderung der Richtung auf eine Bewegung der Signalisierungseinheit rückgeschlossen werden und hieraus eine Gefährdungssituation ermittelt werden.

Noch weiter ist es bevorzugt, dass die Signalverarbeitungseinrichtung ausgebildet ist, um einen Abstand zwischen der Signalisierungseinheit und der Signalempfangseinrichtung und/oder eine sich von der Signalempfangseinrichtung zu der Signalisierungseinheit erstreckende Richtung zu bestimmen, und unter Berücksichtigung dieses Abstands und oder dieser Richtung zu bestimmen, ob eine Gefährdungssituation vorliegt. Gemäß dieser Fortbildungsform wird anhand eines ermittelten Abstands und / oder einer ermittelten Richtung zwischen Signalisierungseinheit und Signalempfangseinrichtung durch die Signalverarbeitungseinrichtung ermittelt, ob eine Gefährdungssituation vorliegt. Dabei kann diese Ermittlung in einer Momentaufnahme anhand eines Abstands bzw. einer Richtung durchgeführt werden oder anhand der Analyse von zwei oder mehr aufeinanderfolgenden Abständen oder Richtungen um hieraus auf eine Bewegungsform der Signalisierungseinheit in Bezug auf die Signalempfangseinrichtung zu schließen und diese Bewegungsform bei der Ermittlung der Gefährdungssituation zu berücksichtigen.

Noch weiter ist es bevorzugt, wenn dabei die Signalverarbeitungseinrichtung weiterhin ausgebildet ist, um eine vorbestimmte geometrische Konstellation zwischen dem Körperteil des Benutzers und der vom Benutzer getragenen Signalisierungseinheit zu verarbeiten und unter Berücksichtigung dieser geometrischen Konstellation zu bestimmen, ob eine Gefährdungssituation vorliegt. Diese weitere Berücksichtigung einer biomechanischen Konstellation, also beispielsweise eines anatomischen Zusammenhangs zwischen dem Ort, an dem die Signalisierungseinheit vom Benutzer getragen wird und einem gefährdeten Körperteil oder einer biomechanische Größe, welche Bewegungsmöglichkeiten eines Körperteils durch Gelenke, die zwischen der Signalisierungseinheit und dem Körperteil liegen, beschreibt, kann zu einer präziseren Ermittlung, ob für ein bestimmtes Körperteil eine Gefährdungssituation vorliegt, herangezogen werden. Hierzu sind entsprechende geometrische Konstellationen zwischen Körperteil und dem Ort, an dem der Benutzer die Signalisierungseinheit trägt, in der Signalisierungseinheit gespeichert oder in der Signalverarbeitungseinheit gespeichert und werden übermittelt und können bei der Ermittlung, ob eine Gefährdungssituation vorliegt, daher einbezogen und berücksichtigt werden. Dabei ist es besonders bevorzugt, wenn die Signalisierungseinheit einen Identifikationscode an die Signalempfangseinrichtung sendet, der eine individuelle Erkennung der Signalisierungseinheit zulässt und hieraus es der Signalverarbeitungseinheit ermöglicht den Ort, an dem die Signalisierungseinheit getragen wird, zu bestimmen, beispielsweise indem der Identifikationscode eine direkte Aussage über diesen Ort enthält oder indem der Identifikationscode anhand einer Tabelle einem Trageort an den Benutzer zugeordnet werden kann.

Noch weiter ist es bevorzugt, wenn die Signalisierungseinheit an einem Kleidungsaccessoire angeordnet ist, insbesondere an einem Handschuh, an einem um den Arm getragenen Band, wie einem Armring, Armreif oder Uhrenarmband, an einem Fingerring, oder in einem Implantat. Gemäß dieser Ausführungsform werden verschiedene bevorzugte Trageformen für die Signalisierungseinheit oder für mehrere Signalisierungseinheiten erfindungsgemäß genutzt. So kann beispielsweise ein vom Benutzer typischerweise getragener Arbeitshandschuh mit einer oder mehreren Signalisierungseinheiten ausgerüstet werden, beispielsweise können Signalisierungseinheiten im Bereich des Handgelenks, der Fingerknöchel, der Fingerspitzen oder dergleichen platziert werden, um für die insbesondere durch Verletzungen gefährdete Hand des Benutzers exakt eine Position bestimmen zu können und sie vor Gefährdungen schützen zu können. Der Handschuh kann dabei solcherart aufgebaut sein, dass er sensorische Elemente, die für die Lagebestimmung der Signalisierungseinheit ortsaufgelöst notwendig sind, im Bereich der Knöchel, Fingergelenke und/oder Fingerspitzen aufweist. Für die Lagebestimmung der Signalisierungseinheit nicht ortskritische Bauteile wie beispielsweise eine Energiequelle, eine Sendeeinheit oder eine Empfangseinheit können an einer anderen Stelle des Handschuhs, beispielsweise im Bereich des Handgelenks angeordnet werden und zur Signal und Energieübertragung mit den sensorisch relevanten Bauteilen der Signalisierungseinheit verbunden werden können. Auf diese Weise kann der Handschuh solcherart aufgebaut werden, dass er die Tätigkeit des Benutzers nicht oder kaum behindert und die Ausrüstung des Handschuhs mit der Signalisierungseinheit für den Benutzer haptisch nicht in Erscheinung tritt. Neben dem Handschuh kann auch ein um den Arm getragenes Band oder ein Fingerring vom Benutzer angezogen werden oder sonstige persönliche Ausrüstungsgegenstände wie eine Brille oder eine Kopfbedeckung eingesetzt werden, die eine entsprechende Signalisierungseinheit enthalten, um eine Ortsbestimmung durchzuführen.

In einer hierzu alternativen oder ergänzenden Ausgestaltung kann die Signalisierungseinheit auch als kleines Implantat ausgeführt sein, dass unter die Haut des Benutzers eingesetzt wird und hierdurch eine dauerhafte und bei entsprechend kleiner Größe der Signalisierungseinheit haptisch nicht störende Erfassung der Position des Körperteils ermöglicht.

Noch weiter ist es bevorzugt, wenn die Signalisierungseinheit eine Dateninformation speichert, die ein Sicherheitskriterium umfasst und die Signalempfangseinrichtung ausgebildet ist, um diese Dateninformation von der Signalisierungseinheit zu empfangen und um in Abhängigkeit des Sicherheitskriteriums zu bestimmen, ob ein Gefährdungssituation vorliegt. Gemäß dieser Fortbildungsform speichert die Signalisierungseinheit ein Sicherheitskriterium, welches eine Angabe darüber enthält, welche Sicherheitsstufe in Bezug auf diese Signalisierungseinheit einzuhalten ist. Dieses Sicherheitskriterium wird von der Signalisierungseinheit an die Signalempfangseinrichtung gesendet und kann folglich von der Signalverarbeitungseinrichtung verarbeitet werden, um zu bestimmen, ob eine Gefährdungssituation unter Berücksichtigung dieses Sicherheitskriteriums vorliegt. Das Sicherheitskriterium kann beispielsweise beschreiben, ob die Signalisierungseinheit an einem Körperteil getragen wird, dass potenziell sehr schnell bewegt werden kann, beispielsweise einen Finger oder einer Hand oder eher weniger schnell bewegt werden kann, beispielsweise ein Rumpf, um in Abhängigkeit von dieser potenziellen Bewegungsgeschwindigkeit eine Gefährdungssituation mit entsprechend unterschiedlichen Kriterien zu bestimmen. Das Sicherheitskriterium kann auch in Abhängigkeit des Benutzers gewählt werden, beispielsweise kann das Sicherheitskriterium den Benutzer im Hinblick auf seinen Ausbildungsgrad charakterisieren und bei Benutzern mit geringerem Ausbildungsgrad ein anderes Kriterium zur Bestimmung einer Gefährdungssituation anlegen als bei Benutzern mit einem höheren Ausbildungsgrad. So können beispielsweise Auszubildende oder Ungelernte, die mit der Werkzeugmaschine arbeiten eine frühzeitigere Erkennung eines Gefährdungszustandes, beispielsweise bei Unterschreitung eines größeren Mindestabstandes bewirken, als erfahrene oder ausgebildete Fachkräfte, für die ein geringerer Mindestabstand von der Sicherheitseinrichtung zu Grunde gelegt wird.

Noch weiter ist es bevorzugt, wenn dass die Signalisierungseinheit eine Dateninformation speichert, die ein Sicherheitskriterium umfasst und die Signalempfangseinrichtung ausgebildet ist, um diese Dateninformation von der Signalisierungseinheit zu empfangen und an die Signalverarbeitungseinrichtung zu leiten und dass die Signalverarbeitungseinrichtung ausgebildet ist, um in Abhängigkeit des Sicherheitskriteriums einen vorbestimmten Minimalabstand zwischen Bearbeitungswerkzeug und Körperteil des Benutzers und/oder eine vorbestimmte maximale Bewegungsgeschwindigkeit der Signalisierungseinheit zu bestimmen aus einer Positionskomponente einen aktuellen Abstand zwischen Bearbeitungswerkzeug und Körperteil des Benutzers und/oder aus zwei zeitlich aufeinanderfolgenden Positionskomponenten eine aktuelle Bewegungsgeschwindigkeit der Signalisierungseinheit zu bestimmen und um festzustellen, dass eine Gefährdungssituation vorliegt, wenn der aktuelle Abstand den Minimalabstand unterschreitet und/oder die aktuelle Geschwindigkeit die maximale Bewegungsgeschwindigkeit überschreitet. Gemäß dieser Ausführungsform wird in Abhängigkeit des Abstandes und der Bewegungsgeschwindigkeit, insbesondere einer Bewegungsgeschwindigkeitskomponente in Richtung auf das Bearbeitungswerkzeug ermittelt, ob eine Gefährdungssituation vorliegt und hierbei ein Sicherheitskriterium berücksichtigt, welches die zuvor beschriebenen Eigenschaften in Bezug auf eine Position an einem bestimmten Körperteil oder in Bezug auf das Tragen durch einen bestimmten Benutzer charakterisiert.

Erfindungsgemäß ist vorgesehen, dass die Signalverarbeitungseinrichtung ausgebildet ist, um eine Bewegungsgeschwindigkeit und vorzugsweise weiterhin eine Beschleunigung des Körperteils zu ermitteln, und um in Abhängigkeit der Bewegungsgeschwindigkeit und gegebenenfalls der Beschleunigung des Körperteils zu ermitteln, ob eine Gefährdungssituation vorliegt. Gemäß dieser Fortbildungsform wird durch die Signalverarbeitungseinrichtung eine Geschwindigkeit und vorzugsweise auch eine Beschleunigung des Körperteils ermittelt und in Abhängigkeit dieser Geschwindigkeit und gegebenenfalls der Beschleunigung bestimmt, ob eine Gefährdungssituation vorliegt. Dabei kann in einfacher Näherung als Geschwindigkeit oder Beschleunigung des Körperteils die Geschwindigkeit oder Beschleunigung der Signalisierungseinheit zu Grunde gelegt werden, in besserer Näherung können jedoch auch aus den Daten von zwei Signalisierungseinheiten, die an einem Benutzer getragen werden, Lageänderungen, Winkelbeschleunigungen oder Geschwindigkeiten von Körperteilen unter Berücksichtigung von anatomischen Daten berechnet werden, um hierdurch eine Gefährdungssituation in genau präziser Weise auch für solche Körperteile zu ermitteln, an denen nicht unmittelbar eine Signalisierungseinheit getragen wird, beispielsweise um eine Prognose für eine Lage der Fingerspitzen des Benutzers aus der Position und Geschwindigkeit die am Fingerknöchel getragen werden, zu bestimmen.

Gemäß einer weiteren bevorzugten Ausführungsform ist vorgesehen, dass die die Signalverarbeitungseinrichtung ausgebildet ist, um einen Bearbeitungsparameter, der einen Betriebsparameter der Werkzeugmaschine charakterisiert, zu empfangen, und um in Abhängigkeit des Bearbeitungsparameters zu ermitteln, ob eine Gefährdungssituation vorliegt. Gemäß dieser Ausführungsform wird bei der Ermittlung, ob eine Gefährdungssituation vorliegt, zusätzlich ein Bearbeitungsparameter berücksichtigt. Dieser Bearbeitungsparameter charakterisiert einen Betriebsparameter und kann folglich auch direkt als Betriebsparameter in die Ermittlung einfließen. Als Betriebsparameter ist hierbei ein Parameter zu verstehen, der eine Einstellung der Werkzeugmaschine oder einen Bearbeitungsfortschritt an der Werkzeugmaschine beschreibt. Typische solche Betriebsparameter sind beispielsweise eine Schnittgeschwindigkeit, eine Winkeleinstellung, mit der eine Bearbeitung erfolgt, beispielsweise eine Verschwenkung eines Sägeblatts, eine Vorschubgeschwindigkeit oder eine Vorschubposition eines Schlittens, der das Werkstück oder das Werkzeug trägt, oder eine Bearbeitungsangabe, die eine Folge von Bearbeitungsschritten beschreibt. Betriebsparameter können unmittelbar Einfluss auf eine Gefährdungssituation haben, so kann beispielsweise durch einen Betriebsparameter der Gefährdungsbereich eines Bearbeitungswerkzeugs beeinflusst werden, weil sich beispielsweise durch Verschwenkung eines Kreissägeblatts ein anderer Gefährdungsbereich ergibt, als bei einem nicht verschwenkten Kreissägeblatt. Betriebsparameter können als Rückschluss auf Bewegungen des Bedieners, die für eine jeweilige Bearbeitungsweise mit Hilfe des Betriebsparametes typisch und charakteristisch sind, verarbeitet werden und daher eine präzisere und an die jeweilige Bearbeitung angepasste Ermittlung erlauben, ob eine Gefährdungssituation vorliegt, oder nicht. So kann beispielsweise bei bestimmten Betriebsparametern die Positionierung der Hand typischerweise vom Bediener anders gewählt werden, als bei anderen Betriebsparametern und durch die Berücksichtigung des Betriebsparameters die Gefährdungssituation folglich realistischer ermittelt werden.

Dabei ist es noch weiter bevorzugt, wenn die Signalverarbeitungseinrichtung ausgebildet ist, um anhand des Bearbeitungsparameters eine Plausibilitätsprüfung auszuführen, indem einer oder mehrerer Positionskomponenten eine Position, eine Bewegungsrichtung und/oder eine Bewegungsgeschwindigkeit der Signalisierungseinheit ermittelt wird, die Position, Bewegungsrichtung und/oder Bewegungsgeschwindigkeit mit einer dem Bearbeitungsparameter zugeordneten, plausiblen Position, Bewegungsrichtung bzw. Bewegungsgeschwindigkeit zu vergleichen, und um eine Abweichung zwischen der ermittelten Position, Bewegungsrichtung und/oder Bewegungsgeschwindigkeit von der zugeordneten, plausiblen Position, Bewegungsrichtung bzw. Bewegungsgeschwindigkeit zu ermitteln und um in Abhängigkeit dieser Abweichung zu ermitteln, ob eine Gefährdungssituation vorliegt.

Gemäß dieser Fortbildung wird mit Hilfe des Betriebsparameters und der Positionskomponente(n) geprüft, ob eine typische Bediensituation durch den Benutzer stattfindet, indem für eine bestimmte, für den Betriebsparameter übliche oder durch den Betriebsparameter vorgegebene Bearbeitungsweise die Position eines oder mehrerer Körperteile des Bedieners anhand der Positionskomponente erfasst und mit typischen Positionen abgeglichen wird. Dies kann durch entsprechende Vergleichstabellen oder Algorithmen, die in der Signalverarbeitungseinrichtung abgespeichert sind, erfolgen. Hierdurch wird geprüft, ob eine plausible Position, Bewegungsrichtung oder Bewegungsgeschwindigkeit des Körperteils erfolgt, die zu dem jeweiligen Bearbeitungsparameter passend ist, um eine an die jeweilige Bearbeitungssituation gut angepasste und realistische Ermittlung, ob eine Gefährdungssituation vorliegt, durchzuführen. Dabei wird unter einer solchen Plausibilitätsprüfung auch verstanden, dass beispielsweise vom Benutzer geführte Bauteile, die er beispielsweise mit der Hand bewegt und für die eine Positionsangabe als Betriebsparameter vorliegt und zum Vergleich herangezogen werden kann, mit der Führungsbewegung des Benutzers, also beispielsweise dessen Handbewegung, verglichen wird, um hieraus zu prüfen, ob der Benutzer möglicherweise mit seiner Hand abgerutscht ist und eine unerwünschte Relativbewegung zwischen Hand und Bauteil der Werkzeugmaschine stattfindet, die als Gefährdungssituation eingestuft werden könnte.

Noch weiter ist es bevorzugt, wenn die Sicherheitseinrichtung eine zweite Signalisierungseinheit aufweist und dass die Signalisierungseinheit ausgebildet ist, um einen ersten individuellen Identifikationscode an die Empfangseinheit zu senden, die zweite Signalisierungseinheit ausgebildet ist, um einen zweiten individuellen Identifikationscode an die Empfangseinheit zu senden, die Signalempfangseinrichtung ausgebildet ist, um eine zweite Positionskomponente der zweiten Signalisierungseinheit zu erfassen, und die Signalverarbeitungseinheit ausgebildet ist, um aus den von der Signalempfangseinrichtung übermittelten ersten und zweiten individuellen Identifikationscode und einem von der Signalempfangseinrichtung übermitteltem, die zweite Positionskomponente der Signalisierungseinheit beschreibendem Signal die Signalisierungseinheit und die zweite Signalisierungseinheit einem ersten und entsprechend zweiten Körperteil eines Benutzers zuzuordnen und zu ermitteln, ob eine Gefährdungssituation in Bezug auf das zweite Körperteil, insbesondere eine Unterschreitung eines vorbestimmten Mindestabstands zwischen einem zweiten Körperteil des Benutzers und dem Bearbeitungswerkzeug vorliegt und um, wenn ermittelt ist, dass eine solche Gefährdungssituation vorliegt, das Gefährdungssignal an die Gefahrreduktionsvorrichtung zu senden.

Gemäß dieser Ausführungsform trägt ein Benutzer zwei Signalisierungseinheiten, die sich durch jeweils individuelle, unterschiedliche Identifikationscodes der Empfangseinheit erkennbar machen, sodass die Sicherheitseinrichtung dazu befähigt ist, zwei Körperteile des Benutzers auf eine etwaige Gefährdungssituation zu überwachen. Dabei ist der Begriff Körperteil erfindungsgemäß so zu verstehen, dass diese zwei unterschiedlichen Körperteile beispielsweise die linke und die rechte Hand eines Benutzers oder den Zeigefinder und den Daumen eines Benutzers bedeuten kann, ebenso gut kann hierunter auch eine Positionserfassung einer Hand oder eines Unterarms mit Hilfe von zwei an der Hand oder zwei an dem Unterarm angeordneten Signalisierungseinheiten erfolgen, um aus den zwei Positionen eine exakte Ausrichtung des Arms bzw. der Hand zu bestimmen.

Grundsätzlich ist zu verstehen, dass die Fortbildung mit einer zusätzlichen, zweiten Signalisierungseinheit auch in weiterer Fortbildung mehr als zwei Signalisierungseinheiten zur Erfassung von entsprechend mehr als zwei Körperteilen des Benutzers umfassen kann, sodass eine je nach Gefährdungslage an der Werkzeugmaschine sichere, alle von Gefährdungssituationen erfassten Körperteile in der Sicherheitseinrichtung überwachbar macht.

Gemäß einer weiteren bevorzugten Ausführungsform mit einer zweiten Signalisierungseinheit ist vorgesehen, dass die Signalisierungseinheit ausgebildet ist, um einen ersten individuellen Identifikationscode an die Empfangseinheit zu senden, die zweite Signalisierungseinheit ausgebildet ist, um einen zweiten individuellen Identifikationscode an die Empfangseinheit zu senden, die Signalempfangseinrichtung ausgebildet ist, um eine zweite Positionskomponente der zweiten Signalisierungseinheit zu erfassen, und die Signalverarbeitungseinheit ausgebildet ist, um aus den von der Signalempfangseinrichtung übermittelten ersten und zweiten individuellen Identifikationscode und einem von der Signalempfangseinrichtung übermitteltem, die zweite Positionskomponente der zweiten Signalisierungseinheit beschreibendem Signal die Signalisierungseinheit einem Körperteil eines ersten Benutzers und die zweite Signalisierungseinheit einem Körperteil eines zweiten Benutzers zuzuordnen und um zu ermitteln, ob eine Gefährdungssituation in Bezug auf den zweiten Benutzer, insbesondere eine Unterschreitung eines vorbestimmten Mindestabstands zwischen dem Körperteil des zweiten Benutzers und dem Bearbeitungswerkzeug, vorliegt und um, wenn ermittelt ist, dass eine solche Gefährdungssituation vorliegt, das Gefährdungssignal an die Gefahrreduktionsvorrichtung zu senden.

Gemäß dieser Ausführungsform wird die Überwachung von zwei Benutzern, die an einer Werkzeugmaschine arbeiten mit Hilfe der ersten und zweiten Signalisierungseinheit ermöglicht. Dabei ist auch hier zu verstehen, dass neben zwei auch drei, vier oder mehr Benutzer mit Hilfe von entsprechend drei, vier, oder mehr Signalisierungseinheiten überwacht werden können. Insbesondere ist auch zu verstehen, dass diese Ausführungsform zur Überwachung von mehreren Benutzern an einer Werkzeugmaschine auch kombiniert sein kann mit einer Überwachung von mehreren Körperteilen des jeweiligen Benutzers durch entsprechend zusätzliche Signalisierungseinheiten.

Dabei ist es weiter bevorzugt, wenn die Signalverarbeitungseinheit ausgebildet ist, um zur Ermittlung, ob eine Gefährdungssituation in Bezug auf den Benutzer vorliegt, ein erstes Beurteilungskriterium anzuwenden, zur Ermittlung, ob eine Gefährdungssituation in Bezug auf den zweiten Benutzer vorliegt, ein zweites Beurteilungskriterium anzuwenden, wobei das erste Beurteilungskriterium verschieden ist von dem zweiten Beurteilungskriterium.

Grundsätzlich kann eine Gefährdungssituation für jeden Benutzer mit gleichen Maßstäben und Kriterien ermittelt werden. In bestimmten Bediensituationen ist es jedoch vorteilhaft, wenn für zwei Benutzer keine übereinstimmenden Kriterien angelegt werden, sondern durch ein erstes und ein zweites Beurteilungskriterium, die voneinander verschieden sind, die Benutzer hinsichtlich einer etwaigen Gefährdungssituation unterschiedlich bewertet werden. So kann beispielsweise ein Benutzer, der an der Werkzeugmaschine für die Materialzufuhr oder die Materialabfuhr zuständig ist, nicht jedoch für den eigentlichen Bearbeitungsvorgang, einen typischen Arbeitsbereich aufweisen, der weit vom Bearbeitungswerkzeug entfernt ist. Für diesen Benutzer könnte bereits dann, wenn eine für diese Tätigkeit untypische Annährung an das Bearbeitungswerkzeug erfolgt, eine Gefährdungssituation vorliegen. Die Gefährdungssituation würde daher bei einem Abstand vom Bearbeitungswerkzeug festgestellt werden, der für einen anderen Benutzer, der den Bearbeitungsvorgang durchführt und daher typischerweise näher zum Bearbeitungswerkzeug angeordnet ist, noch keine Gefährdungssituation feststellen lassen würde.

Gemäß einer weiteren bevorzugten Ausführungsform kann die Sicherheitseinrichtung fortgebildet werden durch eine Bauteilsignalisierungseinheit, die an einem beweglichen Bauteil der Werkzeugmaschine befestigt ist, wobei die Signalempfangseinrichtung ausgebildet ist, um einen Abstand von und/oder eine Richtung zu der Bauteilsignalisierungseinheit zu erfassen und die Signalverarbeitungseinheit ausgebildet ist, um aus einem von der Signalempfangseinrichtung übermitteltem, eine Positionskomponente der Bauteilsignalisierungseinheit beschreibendem Signal eine Positionskomponente des beweglichen Bauteils zu bestimmen und um in Abhängigkeit der Positionskomponente des Bauteils zu ermitteln, ob eine Gefährdungssituation vorliegt.

Grundsätzlich kann die Gefährdungssituation für alle in ihrer Position und Ausdehnung bekannten Bauteile und Werkzeuge der Werkzeugmaschine bestimmt werden, die also hinsichtlich ihrer Positionslage und räumlichen Ausdehnung bekannt sind, beispielsweise, weil diese einen konstanten und unveränderlichen Raumbereich einnehmen oder, weil diese Komponenten zwar während der Bearbeitung Ihre Position oder Ausdehnung verändern, dies aber durch entsprechende Betriebsparameter erfassbar ist und daher bei der Ermittlung des Gefährdungszustands berücksichtigt werden kann. Jedoch kann auch eine Gefährdungssituation von Bauteilen der Werkzeugmaschine ausgehen, deren Position veränderlich und nicht durch einen entsprechenden Betriebsparameter charakterisiert ist. In diesem Fall kann das entsprechende, die Gefährdung verursachende Bauteil der Werkzeugmaschine mit einer Bauteilsignalisierungseinheit versehen werden, um eine Positionsbestimmung dieses Bauteils zu ermöglichen. Hierdurch kann dann die Position des Bauteils durch die Signalempfangseinrichtungen ermittelt und bei der Ermittlung ob eine Gefährdungssituation vorliegt, berücksichtigt werden. Dabei können auch sicherheitsrelevante Bauteile mit Hilfe solcher Bauteilsignalisierungseinheit solcherart überwacht werden, dass diese vom Benutzer in der richtigen, für die Sicherheitsfunktion notwendigen Position und Ausrichtung angeordnet sind, um eine Gefährdungssituation, die unabhängig von der Position eines Körperteils des Benutzers allein dadurch auftritt, dass der Benutzer ein für die Sicherheit relevantes Bauteil nicht korrekt oder gar nicht einsetzt, ebenfalls zu erfassen.

Die Sicherheitseinrichtung gemäß der Erfindung kann weiter fortgebildet werden durch eine Werkstücksignalisierungseinheit, die an einem mit der Werkzeugmaschine bearbeiteten Werkstück befestigt ist, wobei die Signalempfangseinrichtung ausgebildet ist, um einen Abstand von und/oder eine Richtung zu der Werkstücksignalisierungseinheit zu erfassen und die Signalverarbeitungseinheit ausgebildet ist, um aus einem von der Signalempfangseinrichtung übermitteltem, eine Positionskomponente der Werkstücksignalisierungseinheit beschreibendem Signal eine Positionskomponente des Werkstücks zu bestimmen und um in Abhängigkeit der Positionskomponente des Bauteils zu ermitteln, ob eine Gefährdungssituation vorliegt.

Gemäß dieser Ausführungsform wird mittels einer Werkstücksignalisierungseinheit, das an einem Werkstück befestigbar ist, die Werkstückbewegung erfasst und kann bei der Ermittlung eines Gefährdungszustandes berücksichtigt werden. Dies kann beispielsweise eine Plausibilitätsprüfung einer synchron stattfindenden Bewegung eines Körperteils des Benutzers mit dem Werkstück ermöglichen, um ein Abgleiten des Körperteils des Benutzers von dem Werkstück zu erfassen und als Gefährdungssituation festzustellen.

Dabei kann insbesondere vorgesehen sein, dass die Signalverarbeitungseinrichtung ausgebildet ist, um ein Benutzerbewegungsmuster einer vom Benutzer getragene Signalisierungseinheit zu bestimmen und ein Bauteilbewegungsmuster bzw. Werkstückbewegungsmuster einer am Bauteil befestigten Bauteilsignalisierungseinheit bzw. einer am Werkstück befestigten Werkstücksignalisierungseinheit zu bestimmen, das Benutzerbewegungsmuster mit dem Bauteilbewegungsmuster bzw. dem Werkstückbewegungsmuster zu vergleichen, und eine Abweichung zwischen dem Benutzerbewegungsmuster und dem Bauteil- bzw. Werkstückbewegungsmuster, zu bestimmen und in Abhängigkeit dieser Abweichung zu ermitteln, ob eine Gefährdungssituation vorliegt. [Insbesondere kann als Abweichung ein Unterschied, der größer als eine vorbestimmte Abweichungstoleranz ist, bei der Bestimmung der Gefährdungssituation / Unterschreitung des vorbestimmten Mindestabstands zwischen dem Körperteil und dem Bearbeitungswerkzeug berücksichtigt werden.]

Gemäß dieser Ausführungsform wird durch Vergleich einer Bewegung des Bauteils bzw. des Werkstücks mit der Bewegung eines Körperteils des Benutzers ermittelt, ob eine Gefährdungssituation vorliegt. Dies erfolgt, indem Bewegungsmuster miteinander verglichen werden, also typische Bewegungsgeschwindigkeiten, typische Bewegungsbahnen, oder Folge von Bewegungsbahnen, typische Richtungswechsel der Bewegung und/oder typische Positionen an denen eine Bewegung beginnt, die eine Bewegung durchläuft oder an der eine Bewegung endet. Dabei ist zu verstehen, dass nicht zwingend ein solcher Vergleich eine Eins-zu-eins-Übereinstimmung zwischen Benutzerbewegungsmuster beziehungsweise Werkstückbewegungsmuster als Normalzustand, also Nichtgefährdungszustand einstufen muss, sondern es können auch bestimmte Bewegungsverhältnisse, also Abweichbewegungsmuster als typisch erkannt werden, wenn dies für bestimmte Bearbeitungsvorgänge, die einem Bauteilbewegungsmuster oder Werkstückbewegungsmuster zugeordnet werden können, als eine plausible Bewegung des Körperteils des Benutzers abgespeichert ist. Grundsätzlich ist zu verstehen, dass diese Ausführungsform insbesondere ausgeführt werden kann, wenn entsprechende Bewegungsmuster für den Benutzer, also die entsprechenden Körperteile des Benutzers, die Sicherheitsüberwacht werden und für das Bauteil bzw. das Werkstück abgespeichert sind, um einen entsprechenden Vergleich und eine Plausibilitätsprüfung zu ermöglichen. Dabei kann die Signalverarbeitungseinrichtung solcherart ausgebildet sein, dass sie anhand eines vorprogrammierten Bearbeitungsablauf auf entsprechende Bewegungsmuster für Bauteil, Werkstück und Körperteil des Benutzers zurückgreift und diese aus einem Speicher abruft oder die Signalverarbeitungseinrichtung kann solcherart ausgebildet sein, dass sie anhand eins Fragments eines solchen Bewegungsmusters, also beispielsweise des Anfangs eines solchen Bewegungsmusters auf eine typische Bearbeitung schließen kann und dann diese typische Bearbeitung der weiteren Beurteilung und dem Vergleich zugrunde legt. Als Abweichung kann hierbei insbesondere eine Abweichung verstanden werden, die größer als eine vorbestimmte Abweichungstoleranz ist, die dann bei der Bestimmung der Gefährdungssituation, insbesondere der Unterschreitung des vorbestimmten Mindestabstands berücksichtigt wird.

Weiter ist es bevorzugt, wenn die Signalempfangseinrichtung eine Mehrzahl von Signalempfangseinheiten umfasst, die beabstandet voneinander angeordnet und jeweils ausgebildet sind um einen Abstand von und/oder eine Richtung zu der Signalisierungseinheit zu erfassen. Gemäß dieser Ausführungsform werden die Signale der Signalisierungseinheiten durch zwei, drei oder mehr Signalempfangseinheiten erfasst, die beabstandet voneinander sind. Ein solche Erfassung mittels mehrerer Signalempfangseinheiten von unterschiedlichen Orten ausgehend erlaubt eine präzisere Bestimmung der Position einer Signalisierungseinheit, da mehrere Peilungen zur Verfügung stehen und folglich anhand von mehreren ermittelten Abständen oder Richtungen nach Art einer Kreuzpeilung oder nach Art weiter logischer Verknüpfungen solcher Ortungskenngrößen die Position der Signalisierungseinheit sehr präzise bestimmt werden kann.

Gemäß einer weiteren bevorzugten Ausführungsform ist vorgesehen, dass die Signalverarbeitungseinheit ausgebildet ist, um aus mehreren über einen ersten Zeitraum empfangenen, eine Positionskomponente der Signalisierungseinheit beschreibenden Signalen ein erstes Bewegungsmuster zu bestimmen aus mehreren über einen zweiten Zeitraum empfangenen, eine Positionskomponente der Signalisierungseinheit beschreibenden Signalen ein zweites Bewegungsmuster zu bestimmen, das erste und das zweite Bewegungsmuster zu vergleichen, und eine Abweichung zwischen dem ersten und dem zweiten Bewegungsmuster zu bestimmen und in Abhängigkeit dieser Abweichung zu ermitteln, ob eine Gefährdungssituation vorliegt. Diese Ausführungsform dient dazu um wiederkehrende Bewegungsmuster eines Körperteils des Benutzers als Grundlage zur Ermittlung einer Gefährdungssituation heranzuziehen. Dabei beruht das Prinzip darauf, dass solche wiederkehrenden Bewegungsmuster in der Regel gleich oder sehr ähnlich ablaufen und dann, wenn eine solche Übereinstimmung oder Ähnlichkeit nicht vorliegt, eine Gefährdungssituation vorliegen kann. Grundsätzlich kann dies als Überwachung von wiederkehrenden Bearbeitungsschritten verstanden werden. Ebenso gut kann diese Fortbildung aber auch als lernfähige Überwachung ausgeführt sein, bei der zunächst in einem ersten Zeitraum ein Bewegungsmuster eingelernt wird, um dieses Bewegungsmuster in nachfolgenden Bearbeitungsvorgängen als Vergleich heranzuziehen, wenn diese Bearbeitungsvorgänge ein identisches oder ähnliches Bewegungsmuster erwartbar machen.

Gemäß einer weiteren Ausführungsform ist vorgesehen, dass die Gefahrreduktionsvorrichtung ausgebildet ist, um ein optisches und/oder akustisches Warnsignal auszugeben, das Bearbeitungswerkzeug zu bremsen, das Bearbeitungswerkzeug abzuschirmen, das Bearbeitungswerkzeug in eine Nichtgefährdungssituation zu bewegen, und/oder eine Werkstückvorschubeinrichtung zu bremsen. Gemäß dieser Ausführungsform werden als Gefahrreduktionsmaßnahme eine oder mehrere von unterschiedlichen Maßnahmen ergriffen, um die Sicherheit des Benutzers herzustellen. Diese Maßnahmen beginnen bei einer Signalisierung der Gefährdungssituation an den Benutzer, damit dieser eigenständig die Gefährdungssituation erkennt und Maßnahmen zu deren Vermeidung treffen kann bis zu Maßnahmen, die automatisiert an der Werkzeugmaschine ablaufen, um die Gefährdungssituation zu beseitigen.

Gemäß einer weiteren Fortbildungsform kann die erfindungsgemäße Sicherheitseinrichtung fortgebildet werden durch eine optische Informationseinheit, die ausgebildet ist, um eine Blickrichtung des Bedieners zu erfassen und ein Blickrichtungssignal an die Signalverarbeitungseinheit zu senden, die ausgebildet ist, um und in Abhängigkeit dieses Blickrichtungssignals zu ermitteln, ob eine Gefährdungssituation vorliegt, und/oder ein Bearbeitungs- oder Warnsignal in ein Auge des Bedieners zu projizieren, welches eine Information über eine Gefährdungssituation eines Körperteils des Benutzers und/oder eine Information zu einem Bearbeitungsschritt an dem Werkstück beinhaltet. Grundsätzlich ist zu verstehen, dass dieser Aspekt der Erfindung auch unabhängig von der vorstehenden Ausführung einer Sicherheitseinrichtung, wie also der Verwendung von Signalisierungseinheiten, die entsprechende Positionskomponenten senden, ausgeführt werden kann. Bei dieser Fortbildung wird mit Hilfe einer optischen Vorrichtung, die vom Benutzer beispielsweise als Brille getragen werden kann, ermittelt, wohin der Blick des Bedieners gerichtet ist um dies in die Ermittlung, ob eine Gefährdungssituation vorliegt, einfließen zu lassen. So können Situationen, die als kritisch beurteilt werden, weil einen große Nähe eines Körperteils des Benutzers zu einem potenziell verletzenden Bauteil der Werkzeugmaschine festgestellt wurde, weiter dahingehend überprüft werden, ob der Benutzer exakt diese potenzielle Gefährdungssituation im Blick hat oder ob der Blick des Benutzers woanders hingerichtet ist, weil der Benutzer beispielsweise abgelenkt ist, sodass sich die Gefährdungssituation dann im verstärkten Maße darstellt und möglicherweise eine Gefährdungsreduktionsmaßnahme erforderlich macht. Insbesondere kann bei dieser Fortbildung auch alternativ oder zusätzlich vorgesehen sein, dass ein Signal in das Auge des Bedieners projiziert wird, welches als Bearbeitungs- oder Warnsignal ausgeführt ist. Dieses Signal kann die Bediensicherheit weiter erhöhen indem es einerseits ein für den Benutzer zwangsläufig und jederzeit sichtbares Warnsignal darstellt, das von ihm nicht übersehbar ist. Weiterhin kann dem Benutzer die Bediensicherheit erleichtert werden, indem er direkte Bearbeitungsfolgen in das Auge projiziert erhält, beispielsweise Bearbeitungsanweisungen, graphische, seiner Blickrichtung entsprechende Positionierungsangaben von Werkstücken auf einer Werkstückauflagefläche oder dergleichen.

Noch weiter ist es bevorzugt, wenn die Signalempfangsvorrichtung eine erste Signalempfangseinheit umfasst, die unterhalb einer Werkstückauflagefläche der Werkzeugmaschine angeordnet ist. Eine Signalempfangseinheit, die unterhalb einer Werkstückauflagefläche angeordnet ist, hat sich als besonders geeignet erwiesen, um eine exakte Position der Signalisierungseinheiten, die typischerweise oberhalb oder seitlich dieser Werkstückauflagefläche angeordnet sind, zu erzielen.

Dies kann weiter fortgebildet werden, indem die Signalempfangsvorrichtung eine zweite Signalempfangseinheit umfasst, die unterhalb der Werkstückauflagefläche der Werkzeugmaschine und beabstandet von der ersten Signalempfangseinheit angeordnet ist. Gemäß dieser Ausführungsform sind zwei Signalempfangseinheiten bereitgestellt, die unterhalb der Werkstückauflagefläche der Werkzeugmaschine angeordnet sind und durch eine gleichzeitige Erfassung von Positionskomponenten einer Signalisierungseinheit durch beide Signalempfangseinheiten wird eine besonders präzise Bestimmung des Orts der jeweiligen Signalisierungseinheit ermöglicht. Grundsätzlich ist zu verstehen, dass im Bereich der einen oder mehreren Signalempfangseinheiten die Werkstückauflagefläche mit einem spezifischen Material ausgeführt sein kann, welches die Erfassung der Positionskomponente besonders gut ermöglicht, beispielsweise einen Signalaustausch zwischen Signalempfangseinheit und Signalisierungseinheit in geringem Maße oder gar nicht abschirmt oder elektromagnetische Felder, die zur Erfassung der Positionskomponente eingesetzt werden, wenig verfälscht oder abschirmt.

Noch weiter ist es bevorzugt, wenn die Signalempfangsvorrichtung eine Signalempfangseinheit umfasst, die an einem beweglichen Bauteil der Werkzeugmaschine befestigt ist und eine zusätzliche Signalisierungseinheit, wobei die Signalverarbeitungseinrichtung ausgebildet ist, um anhand von Anfrage und Antwortsignalen, die zwischen der Signalempfangsvorrichtung und der zusätzlichen Signalisierungseinheit ausgetauscht werden, die Position der Signalempfangseinheit zu bestimmen. Gemäß dieser Ausführungsform ist eine Signalempfangseinheit an einem beweglichen Bauteil der Werkzeugmaschine befestigt.

Diese Signalempfangseinheit kann die einzige Signalempfangseinheit der Signalempfangseinrichtung sein, oder sie kann zusätzlich zu weiteren Signalempfangseinheiten vorgesehen sein, beispielsweise zusätzlich zu einer weiteren, an dem beweglichen Bauteil befestigten Signalempfangseinheit und/oder zusätzlich zu einer an anderer Position, beispielsweise ortsfest installierter Signalempfangseinheit(en). Für die an dem beweglichen Bauteil installierte(n) Signalempfangseinheit(en) ist es bevorzugt, wenn deren Position absolut oder relativ zu ortsfesten Bauteilen der Werkzeugmaschine, beispielsweise dem Bearbeitungswerkzeug zuverlässig bestimmt werden kann. Dies erfolgt durch die Bereitstellung einer Signalisierungseinheit, die an der Werkzeugmaschine befestigt ist. Diese Signalisierungseinheit kann beispielsweise in die Signalempfangseinheit an dem beweglichen Bauteil integriert sein, sodass durch eine Erfassung der Position dieser Signalisierungseinheit mittels einer anderen, ortsfest an der Werkzeugmaschine befestigten Signalempfangseinheit eine direkte Erfassung der Position der Signalempfangseinheit an dem beweglichen Bauteil erfolgen kann. Die Signalisierungseinheit kann auch unabhängig von der Signalempfangseinheit ortsfest an der Werkzeugmaschine angeordnet sein, sodass durch Ermittlung der Position der Signalisierungseinheit mittels der an dem beweglichen Bauteil angeordneten Signalempfangseinheit(en) eine zuverlässige relative Positionsbestimmung der Signalempfangseinheit in Bezug auf eine ortsfeste Referenzposition an der Werkzeugmaschine erfolgen kann.

Dies ermöglicht es beispielsweise eine Signalempfangseinheit oberhalb der Werkstückauflagefläche zu positionieren, die allerdings nicht ortsfest sondern beweglich ist.. Die Position und ggfs. Bewegung der Signalempfangseinheit kann dabei intrinsisch innerhalb der Sicherheitseinrichtung erfasst und bei der Positionsbestimmung einer vom Benutzer getragenen Signalisierungseinheit berücksichtigt werden, indem das Bauteil, an dem die Signalempfangseinheit befestigt ist, entweder selbst mit einer Signalisierungseinheit ausgerüstet ist, deren Position exakt bestimmt werden kann oder eine (Referenz-)signalisierungseinheit ortsfest an der Werkzeugmaschine angeordnet ist und mittels der beweglich angeordneten Signalempfangseinheit geortet wird.. Auf diese Weise kann die Signalverarbeitungseinrichtung direkt die Position der Signalempfangseinheit, die an dem beweglichen Bauteil befestigt ist, ausrechnen und folglich bei der weiteren Berechnung der Position einer Signalisierungseinheit, die an einem Körperteil eines Benutzers angeordnet ist, berücksichtigen. So kann beispielsweise eine Signalempfangseinheit an einer beweglichen Schutzhaube oder Abschirmeinrichtung des Bearbeitungswerkzeuges selbst befestigt werden, die beweglich ist und deren Position durch eine daran angeordnete Signalisierungseinheit genau ermittelt wird.

Gemäß einer weiteren bevorzugten Ausführungsform ist vorgesehen, dass die Signalverarbeitungseinrichtung ausgebildet ist, um einen Kalibrierungsdatensatz zu speichern, der Kalibrierungsdaten enthält, die eine Signalkorrektur in Abhängigkeit der von einer Signalisierungseinheit empfangenen Positionskomponente beschreiben und um aus der Positionskomponente und den Kalibrierungsdaten die Position der Signalisierungseinheit zu bestimmen. Gemäß dieser Ausführungsform ist ein Kalibrierungsdatensatz in der Signalverarbeitungseinrichtung abgespeichert, der ortsbezogene Kalibrierungsdaten enthält. Hierdurch kann zu jeder Positionskomponente oder Position einer Signalisierungseinheit eine Berücksichtigung von Kalibrierungsdaten erfolgen, die individuell für diese Position ermittelt wurde und abgespeichert ist. Durch einen solchen Kalibrierungsdatensatz kann ein Feld oder Messfehler, der sich durch Ablenkungen, Inhomogenität oder sonstige Einflussnahmen auf die Genauigkeit der Positionsbestimmung auswirkt, in solcher Weise berücksichtigt werden, dass eine exakte Positionsbestimmung erzielt wird.

Dabei ist es noch weiter bevorzugt, wenn die Signalverarbeitungseinrichtung ausgebildet ist, um zumindest einen Maschinenparameter der Werkzeugmaschine zu empfangen, der eine aktuelle Maschineneinstellung der Werkzeugmaschine beschreibt und um einen Kalibrierungsdatensatz zu speichern, der Kalibrierungsdaten enthält, die eine Signalkorrektur in Abhängigkeit des empfangenen Maschinenparameters beschreiben und um aus der Positionskomponente, dem empfangenen Maschinenparameter und den Kalibrierungsdaten die Position der Signalisierungseinheit zu bestimmen. Während grundsätzlich durch die Werkzeugmaschine selbst, die häufig eine größere Anzahl von metallischen Komponenten und Bauteilen aufweist, eine Beeinflussung der Positionsbestimmung ergibt, die durch eine Kalibrierung kompensiert werden kann, ändert sich diese Einflussnahme durch die Werkzeugmaschine auch durch verstellbare oder bewegliche Bauteile der Werkzeugmaschine, insbesondere wenn diese aus Metall bestehen oder selbst ein elektromagnetisches Feld erzeugen. In diesem Fall ist es für die Genauigkeit der Positionsbestimmung eines Körperteils des Benutzers notwendig oder für die Genauigkeit förderlich, wenn Maschinenparameter der Werkzeugmaschine von der Signalverarbeitungseinrichtung empfangen werden, die eine entsprechende Position oder Ausrichtung oder einen Betriebszustand eines Bauteils der Werkzeugmaschine beschreiben, um diesen Maschinenparameter bei der Kalibrierungsberücksichtigung einfließen zu lassen. Dies kann erfolgen, indem auf entsprechend individuelle Kalibrierungsdaten zurückgegriffen wird, die in Abhängigkeit des Maschinenparameters ausgewählt werden oder indem ein Kalibrierungsdatensatz mittels eines Algorithmus, der den Maschinenparameter verarbeitet, angepasst werden.

Noch weiter ist es bevorzugt, wenn die Signalverarbeitungseinrichtung ausgebildet ist, um die Signalempfangseinheit zur Absendung eines Abfragesignals an die Signalisierungseinheit mit einer Abfragefrequenz anzusteuern und um die Abfragefrequenz in Abhängigkeit des ermittelten Abstands und/oder der Geschwindigkeit des Körperteils von dem Bearbeitungswerkzeug in solcher Weise zu verändern, dass die Abfragefrequenz erhöht wird, wenn sich der Abstand verringert und/oder wenn sich die Geschwindigkeit erhöht.

Grundsätzlich kann eine besonders genaue Positionsbestimmung durch eine Kommunikation zwischen Signalempfangseinheit und Signalisierungseinheit erfolgen, die mit einer bestimmten Frequenz erfolgt. Diese Abfolge von Abfrage und Antwort mit einer bestimmten Frequenz erfordert Rechenzeit und muss damit im Sinne einer angestrebten Echtzeitverarbeitung der Daten solcherart verwaltet werden, dass die Prozessorleistung nicht so weit überlastet wird, dass eine Echtzeitverarbeitung nicht mehr erreichbar ist. Gemäß dieser Ausführungsform wird die Abfragefrequenz daher nicht konstant gehalten, sondern wird in Abhängigkeit der Wahrscheinlichkeit einer Gefährdungssituation angepasst. Hierzu wird beispielsweise in einem oder mehreren Schritten die Abfragefrequenz erhöht, wenn sich ein Körperteil einem gefährdenden Bauteil der Werkzeugmaschine nähert oder wenn ein Körperteil eine Geschwindigkeitsstufe überschreitet. Auf diese Weise können Signalisierungseinheiten, die an Körperteilen angeordnet sind, mit höherer Frequenz abgefragt werden, wenn sich diese Signalisierungseinheiten unterhalb eines ersten kritischen Abstandes von dem Bearbeitungswerkzeug befinden oder wenn sich diese Körperteile mit einer hohen Geschwindigkeit bewegen, die rasch zu einer Annäherung an ein Bearbeitungswerkzeug führen kann. Demgegenüber müssen Signalisierungseinheiten, die an Körperteilen angeordnet sind, die sich weit von einem gefährdenden Bauteil entfernt befinden oder die sich nur sehr langsam bewegen, mit nur einer geringeren Frequenz abgefragt werden, da hier eine Gefährdungssituation nicht unmittelbar bevor stehen kann.

Noch weiter ist es bevorzugt, wenn die Signalverarbeitungseinrichtung ausgebildet ist, um die Signalempfangseinheit zur Absendung eines ersten Abfragesignals an eine erste Signalisierungseinheit mit einer ersten Abfragefrequenz anzusteuern und um die Signalempfangseinheit zur Absendung eines zweiten Abfragesignals an eine zweite Signalisierungseinheit mit einer zweiten Abfragefrequenz anzusteuern und um die erste Abfragefrequenz niedriger als die zweite Abfragefrequenz einzustellen. Gemäß dieser Ausführungsform ist die Signalverarbeitungseinrichtung ausgebildet, um zwei oder mehr unterschiedliche Signalisierungseinheiten mit entsprechend zwei oder mehr unterschiedlichen Abfragefrequenzen abzufragen. Hierdurch wird eine differenzierte Erfassung der Positionskomponenten bzw. Positionen von mehreren Signalisierungseinheiten ermöglicht, die in Abhängigkeit von der Wahrscheinlichkeit, dass eine Gefährdungssituation bevorsteht gesteuert werden kann. Dabei ist zu verstehen, dass die Abfragefrequenz auch verändert werden kann, insbesondere in Abhängigkeit einer Veränderung der Position der jeweiligen Signalisierungseinheit, wenn sich diese einem Bearbeitungswerkzeug, beispielsweise solcherart annähern, dass eine Gefährdungssituation wahrscheinlicher wird, um die Frequenz dann zu erhöhen oder wenn sich die Signalisierungseinheit aus einer ursprünglich gefährlichen Situation wieder entfernt, um dann die Frequenz zu verringern.

Gemäß einer weiteren bevorzugten Ausführungsform ist vorgesehen, dass die Signalisierungseinheit an einem Handschuh befestigt ist und eine erste Signalisierungseinheit im Bereich eines ersten Fingers oder Fingerknöchels und eine zweite Signalisierungseinheit im Bereich des Handgelenks umfasst oder die Signalisierungseinheit an einem Handschuh befestigt ist und eine erste Signalisierungseinheit im Bereich eines ersten Fingers oder Fingerknöchels und eine zweite Signalisierungseinheit im Bereich eines zweiten Fingers oder Fingerknöchels umfasst. Diese Ausführungsformen sind besonders geeignet, um die Finger beziehungsweise die Hand eines Benutzers zu Überwachen und hierbei eine zuverlässige Bestimmung des Fingers oder mehrerer Finger der Hand zu erzielen.

Schließlich ist es noch weiter bevorzugt, wenn die Signalverarbeitungseinheit einen elektronischen Pufferspeicher umfasst und ausgebildet ist, um Positionskomponenten der erfassten Signalisierungseinheiten und von einer Maschinensteuerung empfangenen Maschinenbetriebsdaten an einen signaltechnisch gekoppelten elektronischen Pufferspeicher zu senden und darin abzuspeichern.

Gemäß dieser Ausführungsform werden alle für eine Beurteilung der Sicherheit notwendigen Daten, insbesondere die Positionskomponenten der Signalisierungseinheiten und etwaige Maschinenbetriebsdaten der Werkzeugmaschine gespeichert. Diese Speicherung kann über einen vorbestimmten Zeitraum erfolgen, beispielsweise über einen gesamten Tag, eine Stunde oder der gleichen oder kann auf bestimmte in sich geschlossene die Abspeicherung kann solcherart auch geführt werden, dass eine permanente Überschreibung früherer gespeicherter Daten erfolgt, sodass eine Nachverfolgung stets des zurückliegenden Zeitraums möglich wird, ohne hierbei einen zu umfangreichen Bedarf an Speicherplatz zu verursachen.

Gemäß einer weiteren Ausführungsform ist vorgesehen, dass die Signalverarbeitungseinheit eine Benutzerschnittstelle aufweist und ausgebildet ist, um die Sicherheitseinrichtung in einem ersten Modus, in dem eine Überwachung auf Gefährdungssituation erfolgt, und um die Sicherheitseinrichtung in einem ersten Modus, in dem eine Überwachung auf Gefährdungssituation erfolgt, wobei das Umschalten zwischen dem ersten und dem zweiten Modus über die Benutzerschnittstelle erfolgt und die Sicherheitseinrichtung vorzugsweise eine Schnittstelle zu einer Steuerungseinheit der Werkzeugmaschine aufweist und ausgebildet ist, um über die Schnittstelle eine Aktivierung von sicherheitsrelevanten Bauteilen der Werkzeugmaschine zu blockieren, wenn nicht zumindest eine vom Benutzer getragene Signalisierungseinheit in einem vorbestimmten Überwachungsbereich erfasst wird. Diese Ausführungsform ermöglicht es, die Sicherheitseinrichtung auch abzuschalten und folglich in einem ungesicherten Modus die Werkzeugmaschine zu betreiben.

Generell ist es sowohl bei der Möglichkeit der Abschaltung der Sicherheitseinrichtung als auch bei Sicherheitseinrichtungen, die permanent und unabschaltbar eine Sicherheitsüberwachung ausführen, vorteilhaft, wenn die Sicherheitseinrichtung über eine entsprechende Schnittstelle zur Werkzeugmaschine die Aktivierung gefährdender Bauteile blockieren kann, wenn nicht zumindest eine vom Benutzer getragene Signalisierungseinheit im Bereich der Werkzeugmaschine, also beispielsweise einem vorbestimmten Überwachungsbereich, erfasst wird. Dies verhindert es, dass ein Benutzer das Tragen eines mit Signalisierungseinheiten bestückten Handschuhs oder dergleichen vergisst und dennoch irrtümlich die Werkzeugmaschine in dem Bewusstsein bedient, in einem abgesicherten Modus zu arbeiten.

Es ist weiterhin bevorzugt, wenn die Signalisierungseinrichtung einen Handschuh umfasst, insbesondere durch einen Handschuh gebildet wird, und dass die Signalempfangseinrichtung ausgebildet ist, um eine Farbe, Textur, Lichtreflexeigenschaft oder einen Hell-Dunkel-Wert des Handschuhs zu empfangen und auszuwerten und um anhand der Farbe, Textur, Lichtreflexeigenschaft oder dem Hell-Dunkel-Wert die Positionskomponente der Signalisierungseinheit zu erfassen. Gemäß dieser Ausführungsform wird als Signalisierungseinrichtung ein Handschuh verwendet, was auch die Verwendung von zwei Handschuhen an beiden Händen des Benutzers umfasst. Durch diesen Handschuh wird eine einerseits sichere, andererseits schnelle Erkennung der Position der Hände des Benutzers ermöglicht. Die Nutzung von Handschuhen und daraus abgeleitete Identifizierung der Position der Hände des Benutzers folgt der Erkenntnis, dass einerseits die Hände oftmals in Verletzungen maßgeblich einbezogen sind, andererseits daraus, dass aus der Position einer oder beider Hände des Benutzers auch mit ausreichender Genauigkeit die Position und Lage weiterer Körperteile des Benutzers, die von Verletzungen betroffen sein können, wie beispielsweise der Unterarme des Benutzers, ermittelt werden können.

Darüber hinaus hat die Nutzung eines Handschuhs als Signalisierungseinrichtung den Vorteil, dass hierdurch ein in der Regel ohnehin von einem Benutzer oder Bediener einer Werkzeugmaschine getragenes Kleidungsstück für die Zwecke der Erfindung eingesetzt wird. Es kann sich bei dem Handschuh um ein speziell für die Nutzung der Sicherheitseinrichtung hergestelltes Kleidungsstück handeln, beispielsweise einen Handschuh, der sich durch bestimmte reflexive Eigenschaften, eine bestimmte Farbe oder eine bestimmte Textur auszeichnet, die ihn in besonderer Weise von der typischen Umgebung, wie beispielsweise der Werkzeugauflagefläche im Bereich um ein Schneidwerkzeug der Werkzeugmaschine oder von einer Werkstückoberfläche abzeichnet. Ein solcher durch den Handschuh besonders hervorgehobener Kontrast zwischen der Umgebung und dem Handschuh führt zu einer schnellen, fehlerfreien Erkennung der Position des Handschuhs durch die Signalempfangseinrichtung. Grundsätzlich kann die Signalempfangseinrichtung auf eine einzige Eigenschaft, wie beispielsweise nur die Farbe oder nur den Hell-Dunkel-Wert des Handschuhs im Vergleich mit der Umgebung zurückgreifen, um die Positionskomponente zu erfassen. Die Signalempfangseinrichtung kann aber auch auf mehrere dieser Eigenschaften zurückgreifen, beispielsweise um anhand eines schnell ermittelbaren Wertes eine schnelle Bestimmung der Positionskomponente vorzunehmen und um anhand einer genaueren Berechnung diese gegebenenfalls zu verifizieren. Insbesondere kann auch die Ermittlung der Positionskomponente anhand von Farbe, Textur, Lichtreflexeigenschaft oder Hell-Dunkel-Wert kombiniert werden mit der Positionsbestimmung anhand einer aktiv sendenden Signalisierungseinrichtung oder anhand einer passiv auf ein ausgesendetes elektromagnetisches Signal sendenden Signalisierungseinrichtung wie beispielsweise einem RFID-Sensor kombiniert werden. Auf diese Weise kann die Bestimmung der Positionskomponente durch zwei systemunabhängige Berechnungswege erfolgen, was die Sicherheit der Genauigkeit der Positionskomponente erhöht, zugleich aber auch die Geschwindigkeit der Bestimmung der Positionskomponente nicht verringern muss.

Noch weiter ist es bevorzugt, wenn die Signalempfangseinrichtung und die Signalverarbeitungseinrichtung ausgebildet sind, um in einem Kalibrierungsschritt eine Kalibrierung auf eine Erkennungseigenschaft der Signalisierungseinrichtung auszuführen, insbesondere um einen Kalibrierungswert in Bezug auf einen Datenübertragungsparameter wie einer Signalfrequenz einer aktive aussendenden Signalisierungseinrichtung, oder auf eine Farbe, Textur, Lichtreflexeigenschaft oder einen Hell-Dunkel-Wert einer passiv aussendenden Signalisierungseinrichtung, wie einem Handschuh, in einer elektronischen Speichereinheit zu speichern und um in einem dem Kalibrierungsschritt nachfolgenden Überwachungsvorgang anhand eines Vergleichs des Kalibrierungswerts mit einem von der Signalempfangseinrichtung erfassten Signal die Positionskomponente der Signalisierungseinheit zu erfassen. Gemäß dieser Ausführungsform wird der Überwachung der Gefährdungssituation ein Kalibrierungsschritt vorangestellt. In diesem Kalibrierungsschritt kann ein Benutzer eine bestimmte Erkennungseigenschaft der Signalisierungseinrichtung in die Signalempfangseinrichtung einprogrammieren. Diese Kalibrierung kann beispielsweise darin bestehen, dass ein bestimmter Signalübermittlungsparameter wie beispielsweise eine Signalübermittlungsfrequenz, eine Signalfolgefrequenz, eine Frequenzmodulation oder dergleichen, einer aktiv oder passiv aussendenden Signalisierungseinheit an die Empfangseinrichtung übermittelt wird und die Signalempfangseinrichtung dadurch darüber informiert wird, welche Signalisierungseinheit sie überwachen und lokalisieren soll. Dies ermöglicht es beispielsweise, dass bei Nutzung einer Werkzeugmaschine durch mehrere Benutzer in zeitlich aufeinanderfolgender Weise oder gleichzeitig die Überwachung auf eine bestimmte Signalisierungseinheit, die von einem Benutzer getragen wird, der in eine Gefährdungssituation geraten kann, reduziert wird. Des Weiteren ermöglicht der Kalibrierungsschritt, dass bei Verwendung eines Handschuhs als Signalisierungseinheit die Signalempfangseinrichtung auf einen systemfremden Handschuh kalibriert wird, beispielsweise auf einen üblichen Arbeitshandschuh, der von dem Benutzer zum direkten Schutz vor mechanischen Einwirkungen auf seine Haut getragen wird. Im Kalibrierungsschritt wird dann die Farbe, ein Muster, eine Textur, eine Reflexeigenschaft oder ein Hell-Dunkel-Wert dieses Handschuhs erfasst und abgespeichert und der solcher Art abgespeicherte Wert dient in dem nachfolgenden operativen Vorgang, bei dem die Sicherheitsüberwachung durch die Sicherheitseinrichtung erfolgt, dazu, um den Handschuh durch die Signalempfangseinrichtung zu erkennen und dessen Positionskomponente zu bestimmten. Grundsätzlich kann für diese Fortbildung die Benutzerschnittstelle ausgebildet sein, um dem Benutzer eine Eingabe zu ermöglichen, welche die Durchführung eines Kalibrierungsschrittes signalisiert und welche die Durchführung des Kalibrierungsschrittes beendet. Insbesondere kann hierbei der Kalibrierungsschritt durch die Signalempfangseinrichtung so durchgeführt und gegebenenfalls wiederholt werden bis ausreichende Empfangsdaten der Signalisierungseinrichtung empfangen wurden, welche zur Differenzierung gegenüber der Umgebung genügend sind.

Noch weiter ist es bevorzugt, wenn die Signalempfangseinrichtung eine Bilderfassungsvorrichtung, insbesondere eine Bewegtbilderfassungsvorrichtung wie eine im sichtbaren Lichtspektrum oder im Infrarotspektrum aufnehmende Videokamera ist. Gemäß dieser Ausführungsform wird als Signalempfangseinrichtung beispielsweise eine Videokamera oder mehrere Videokameras mit einer zentralen Bildverarbeitungseinheit eingesetzt. Die Videokameras können auf den Gefährdungsbereich der Werkzeugmaschine ausgerichtet sein und diesen dreidimensional überwachen. Mittels der Videokameras können einerseits Signale im sichtbaren Lichtbereich zuverlässig erfasst werden, beispielsweise eine besondere, dem System immanente Farbe eines Handschuhs, eine zuvor durch Kalibrierung definierte Farbe oder sonstige Erkennungseigenschaft eines Handschuhs und dergleichen. Alternativ oder zusätzlich können eine oder mehrere Videokameras eingesetzt werden, die im infraroten Spektrum eine Bilderfassung ermöglichen. Auf diese Weise kann ein Körperteil eines Benutzers, wie beispielsweise seine Hand, zuverlässig anhand der Körpertemperatur erfasst werden und von der Umgebung differenziert werden. Die Infrarotüberwachung kann in Kombination mit einer Überwachung im sichtbaren Licht erfolgen. Die Infrarotüberwachung und/oder die Überwachung im sichtbaren Lichtbereich kann auch in Kombination mit einer Überwachung mittels aktiv oder passiv sendender Signalisierungseinrichtungen erfolgen. Diese Kombinationen unterschiedlicher Elemente in der Signalempfangseinrichtung führen zu einem verbesserten und fehlerfreien Erkennen der Positionskomponente der Signalisierungseinheit bzw. des Köperteils des Benutzers.

Ein weiterer Aspekt der Erfindung ist ein Verfahren zum Betreiben einer Werkzeugmaschinen, mit den Schritten: Anordnen einer Signalisierungseinheit an einem Körperteil eines Benutzers, Erfassen einer Position und einer Geschwindigkeit und vorzugsweise weiterhin einer Beschleunigung der Signalisierungseinheit mittels einer an der Werkzeugmaschine angeordneten Signalempfangseinrichtung, Ermitteln anhand der erfassten Position und Geschwindigkeit und vorzugsweise der Beschleunigung, ob das Körperteil des Benutzers einer Gefährdungssituation ausgesetzt ist, und Reduzieren oder Vermeiden der Gefährdungssituation mittels einer durch eine Gefahrreduktionsmaßnahme an der Werkzeugmaschine, wenn eine Gefährdungssituation ermittelt wurde.

Das Verfahren kann fortgebildet werden mit dem Schritt: Befestigen der Signalisierungseinheit an einem Bekleidungsteil, insbesondere einem Handschuh, Fingerring oder Armreif, oder Implantieren der Signalisierungseinheit in ein Körperteil des Benutzers.

Das Verfahren kann weiter fortgebildet werden mit dem Schritt: Übermitteln eines Positionssignals und/oder eines Beschleunigungssignals von der Signalisierungseinheit zu der Signalempfangseinrichtung

Das Verfahren kann weiter fortgebildet werden mit dem Schritt: Erzeugen eines elektromagnetischen Feldes durch die Signalempfangseinrichtung, wobei das Erfassen der Position erfolgt, indem die Feldstärke des elektromagnetischen Feldes in der Signalisierungseinheit bestimmt wird, vorzugsweise indem die Feldstärke des elektromagnetischen Feldes in der Signalisierungseinheit in drei zueinander senkrecht stehenden Richtungen bestimmt wird.

Das Verfahren kann weiter fortgebildet werden mit den Schritten: Übermitteln eines Identifikationssignals von der Signalisierungseinheit zu der Signalempfangseinrichtung und Zuordnen der Signalisierungseinheit zu dem Benutzer und/oder dem Körperteil des Benutzers, Wobei mehrere Signalisierungseinheiten an unterschiedlichen Körperteilen und/oder unterschiedlichen Benutzern angeordnet werden und jede Signalisierungseinheit ein individuelles Identifikationssignal aussendet.

Das Verfahren kann weiter fortgebildet werden mit den Schritten: Ermitteln anhand der erfassten Position, Geschwindigkeit bzw. Beschleunigung einer ersten Signalisierungseinheit, die einen ersten Identifikationscode sendet, ob ein erstes Körperteil eines ersten Benutzers einer Gefährdungssituation ausgesetzt ist, weil eine erste Gefährdungsstufe unterschritten ist, Ermitteln anhand der erfassten Position, Geschwindigkeit bzw. Beschleunigung einer zweiten Signalisierungseinheit, die einen zweiten Identifikationscode sendet, ob ein zweites Körperteil des ersten Benutzers oder ob ein erstes Körperteil eines zweiten Benutzers einer Gefährdungssituation ausgesetzt ist, weil eine zweite Gefährdungsstufe unterschritten ist, wobei die erste Gefährdungsstufe von der zweiten Gefährdungsstufe verschieden ist.

Das Verfahren kann weiter fortgebildet werden mit dem Schritt: Berücksichtigen eines von der Werkzeugmaschine empfangenen Bearbeitungsparameters wie einer An/Aus-Stellung eines Bearbeitungswerkzeugs, einer Position oder Ausrichtung eines Bearbeitungswerkzeugs bei der Ermittlung, ob eine Gefährdungssituation vorliegt.

Das Verfahren kann weiter fortgebildet werden mit den Schritten: Vergleichen einer Position oder Bewegungsgeschwindigkeit eines Bauteils der Werkzeugmaschine mit einer Position oder Bewegungsgeschwindigkeit eines Körperteils des Benutzers, das dieses Bauteil führt, und feststellen eines Gefährdungszustands des Körperteils in Abhängigkeit davon, ob ein vorbestimmter maximaler Positionsunterschied oder eine vorbestimmte maximale Relativgeschwindigkeit überschritten ist.

Grundsätzlich ist zu verstehen, dass das Verfahren und seine Fortbildungen vorzugsweise mit der zuvor erläuterten Sicherheitseinrichtung ausgeführt werden kann. Die einzelnen Schritte des Verfahrens können sich hierzu entsprechenden Merkmalen der zuvor erläuterten Sicherheitseinrichtung bedienen und es ist zu verstehen, dass bezüglich der Vorteile, Varianten und Eigenschaften dieser Verfahrensschritte auf die voranstehende Beschreibung der dazu korrespondierenden Vorrichtungsmerkmale der Sicherheitseinrichtung Bezug genommen wird.

Eine bevorzugte Ausführungsform der Erfindung wird an Hand der beiliegenden Figuren beschrieben. Es zeigen:
- Figur 1: eine perspektivische Ansicht einer Werkzeugmaschine, die mit der erfindungsgemäßen Sicherheitseinrichtung ausgerüstet ist,
- Figur 2: eine Detail Ansicht der Figur 1,
- Figur 3: eine schematische Ansicht eines Arms eines Benutzers, der eine entsprechende Ausrüstung für die erfindungsgemäße Sicherheitseinrichtung an einem Handschuh trägt,
- Figur 4: eine perspektivische Draufsicht auf die Werkzeugmaschine mit einer symbolisch dargestellten Hand und Arm eines Benutzers in einer Bearbeitungssituation.

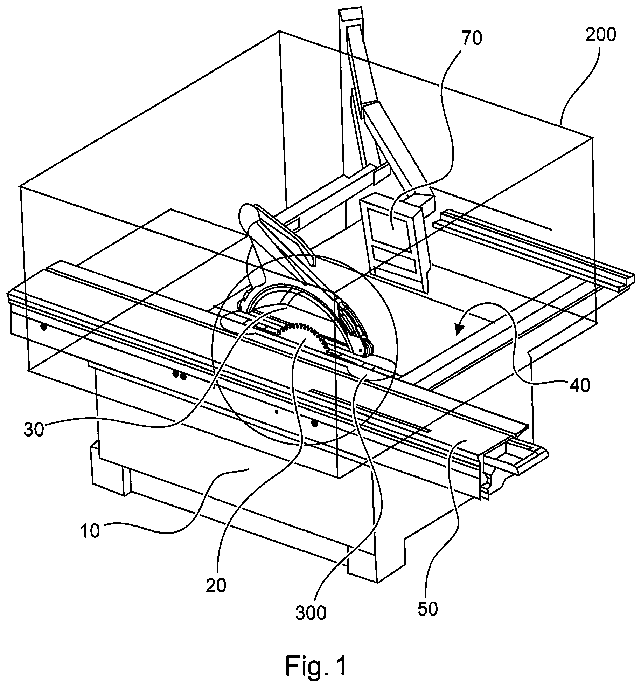

Bezugnehmend zunächst auf Figur 1 umfasst eine Werkzeugmaschine in Form einer Formatkreissäge grundsätzlich ein Maschinengrundgestell 10, in dem ein Bearbeitungswerkzeug in Form eines Kreissägeblattes 20 drehbar um eine Drehachse und schwenkbar um eine in Sägeblattebene liegende horizontale Schwenkachse sowie in der vertikalen Höhe verstellbar gelagert ist. Oberhalb des Kreissägeblatts 20 ist eine Schutzhaube 30 an einem Auslegerarm befestigt, die in der Höhe verstellbar ist.

Das Kreissägeblatt ist in eine Werkstückauflagefläche 40 eingebettet. Direkt benachbarte zum Kreissägeblatt ist ein horizontal translatorisch bewegbarer Schlitten 50 an dem Maschinengrundgestell 10 gelagert.

Auf dem Schlitten 50 kann ein Werkstück aufgelagert und gemeinsam mit dem Schlitten 50 parallel zur Sägeblattebene verschoben werden, wodurch ein Schnitt bei drehendem Kreissägeblatt ausgeführt wird.

Die Formatkreissäge umfasst weiterhin eine Steuerungs- und Bedieneinheit 70, die an einem Armausleger befestigt ist und die zur Bedienung der Formatkreissäge notwendige Benutzerschnittstellen und elektronische Steuerungseinheiten umfasst. In diese Steuerungs- und Bedieneinheit 70 ist auch eine Signalverarbeitungseinheit integriert, die in Kommunikation mit allen Bauelementen für die erfindungsgemäße Sicherheitseinrichtung steht und die notwendige Signalverarbeitungsschritte zur Erkennung eines Gefährdungszustands und zur Einleitung einer Gefahrreduktionsmaßnahme ermittelt.

Durch die Sicherheitseinrichtung wird innerhalb eines Überwachungsbereichs 200, der als kubischer Raum auf der Werkstückauflagefläche ausgebildet ist, überwacht, ob sich eine Signalisierungseinheit im Bereich der Werkzeugmaschine befindet und in einer Gefährdungssituation befindet oder sich in eine Gefährdungssituation bewegt.

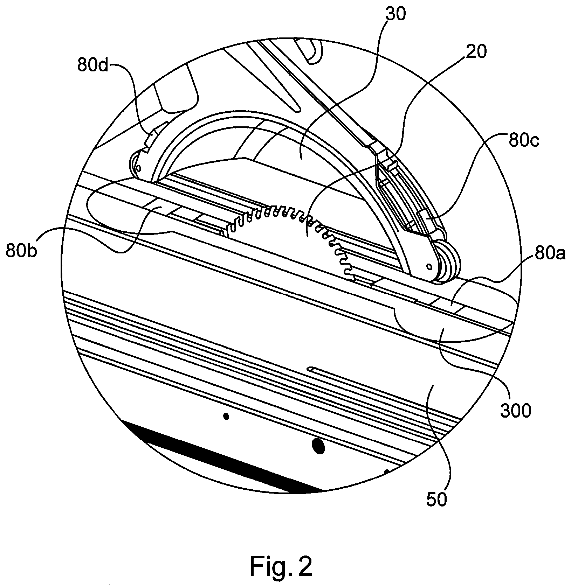

Figur 2 zeigt einen Ausschnitt aus Figur 1, der die für die Sicherheitseinrichtung relevanten Signalempfangseinheiten an der Werkzeugmaschine zeigt. Wie ersichtlich, ist in die Werkstückauflagefläche 40 in Schnittrichtung vor und hinter dem Sägeblatt je eine Signalempfangseinheit 80a, 80b eingelassen, die Werkstückauflagefläche ist in diesem Bereich mit einem Element aus einem nichtmetallischem Werkstoff, beispielsweise einem Kunststoffelement ausgeführt, das fluchtend zur Werkstückauflagefläche liegt und einen besonders guten Empfang von Daten, die für die Sicherheitseinrichtung notwendig sind, ermöglicht. Weitere zwei Signalempfangseinheiten 80c und 80d sind an der Schutzhaube 30 befestigt und sind mit dieser gemeinsam beweglich. Diese Signalempfangseinheiten 80c, 80d umfassen weiterhin eine integrierte Signalisierungseinheit, die eine Positionsbestimmung der Signalempfangseinheiten 80c, 80d mit Hilfe der Signalempfangseinheiten 80a und 80b präzise ermöglicht. Grundsätzlich ist zu verstehen, dass die Signalempfangseinheiten 80c, d zusätzlich zu den Signalempfangseinheiten 80a, b oder anstelle dieser, also als einzige Signalempfangseinheiten vorgesehen sein können und auch Ausgestaltungen ausgeführt sein können, die eine ortsfeste und eine beweglich angeordnete Signalempfangseinheit umfassen. Die Bestimmung der Position der Signalempfangseinheiten 80c,d kann auch mittels einer ortsfest an der Werkzeugmaschine angeordneten Signalisierungseinheit erfolgen, beispielsweise einer in die Werkstückauflagefläche eingelassenen Signalisierungseinheit, deren relative Position zu den Signalempfangseinheiten 80c, d durch die Signalempfangseinheiten 80c, d selbst ermittelt wird und dadurch eine Positionsbestimmung der Signalempfangseinheiten 80c, d ermöglicht. Die Positionsbestimmung der Signalempfangseinheit 80c, 80d fließt in die Berechnung der Position eines Körperteils eines Benutzers in Bezug auf die von der Signalempfangseinheit 80c, 80d empfangenen Positionsdaten ein.

Zu erkennen ist ein im symbolischen Horizontalschnitt eingetragener Gefährdungsbereich 300, der sich um das Kreissägeblatt erstreckt und sowohl am vorderen als auch am hinteren Ende verbreitert ist, sodass sich eine im Horizontalschnitt knochenförmige Geometrie ergibt. Der Überwachungsbereich ist als rotationssymmetrisch um die Drehachse des Kreissägeblatt angeordneter Raum mit dem Querschnitt 300 zu verstehen. Wird ermittelt, dass sich ein Körperteil im Gefährdungsbereich befindet oder mit hoher Wahrscheinlichkeit in naher Zukunft in diesen Gefährdungsbereich hineinbewegt, so ist dies die Feststellung einer Gefährdungssituation, die eine Gefahrreduktionsmaßnahme veranlasst.

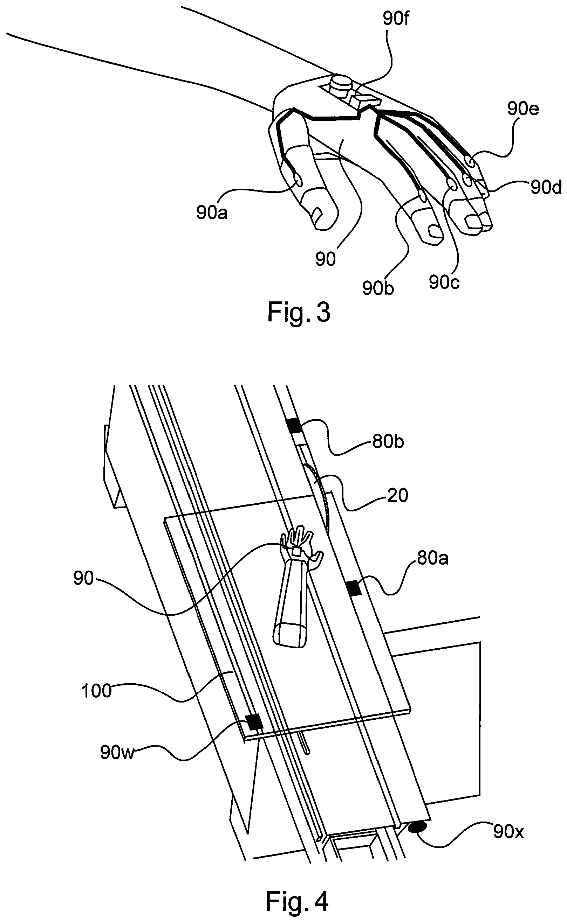

Figur 3 zeigt einen Unterarm und die Hand eines Benutzers, die für die Benutzung der erfindungsgemäßen Sicherheitseinrichtung mit einem entsprechenden Handschuh ausgerüstet ist. Der Handschuh 90 kann in solcher Art ausgeführt werden, dass er die Fingerkuppen des Benutzers nicht bedeckt, sodass ein feines, taktiles und haptisch günstiges Arbeiten möglich ist. An jedem der fünf Finger des Benutzers ist jeweils oberhalb des zweiten Fingerglieds an dem Handschuh eine Signalisierungseinheit 90a-e befestigt. Diese Signalisierungseinheit beinhaltet Detektorbauteile, insbesondere drei jeweils senkrecht zueinander stehende Spulen die in der Lage sind, eine Feldstärke eines von jeder der Signalempfangseinheiten 80a, 80b, 80c, 80d ausgesendeten elektromagnetischen Feldes zu erfassen.

Die Feldstärke dieses elektromagnetischen Feldes, welches von jeder der fünf Signalisierungseinheiten 90a-e in den Detektorbauteilen ermittelt wird, wird über Kabelleitungen, die entlang der Handschuhoberfläche verlaufen, insbesondere in den Handschuh ein laminiert oder mit diesem fest verbunden sein können, zu einer Steuerungseinheit 90f geleitet, die im Bereich des Handrückens an dem Handschuh befestigt ist. Die Steuerungseinheit 90f ist ebenfalls Bestandteil der Gesamtheit der Signalisierungseinrichtung, die an dem Handschuh befestigt ist. Die Steuerungseinheit 90f umfasst einerseits ebenfalls eine separate, sechste Signalisierungseinheit, die am Handschuh befestigt ist und die in gleicher Weise aufgebaut ist wie die Signalisierungseinheiten 90a-e. Weiterhin sind in die Steuerungseinheit integriert eine Batterie, die wieder aufladbar ist sowie eine Sende- und Empfangseinheit, die ausgebildet ist, um mit den Signalempfangseinheiten einen Datenaustausch durchzuführen. Die Steuerungseinheit 90f empfängt die jeweils von jedem Detektorbauteil der Signalisierungseinheiten 90a-e und der selbst integrierten Signalisierungseinheit ermittelten Feldstärken, welche als Positionskomponenten verstanden werden können. Diese Positionskomponenten werden von der Sendeeinheit der Steuerungseinheit 90f auf ein Abfragesignal eines der Signalempfangseinheiten 80a-c hin oder initiativ ohne ein solches Abfragesignal gesendet und können von einer der Signalempfangseinheiten oder einer übergeordneten bspw. in die Bedienungs- und Steuerungseinheit 70 integrierte Empfangseinheit übermittelt werden. Diese Daten ergeben eine präzise Information darüber, an welcher Stelle sich die Hand und die einzelnen fünf Finger der Hand befinden.

Die in die Bedien- und Steuerungseinheit 70 integrierte Signalverarbeitungseinrichtung erhält diese Positionsdaten und ist ausgebildet, um hieraus eine Position der Hand zu berechnen, indem die relative Position der Hand zu den drei Signalempfangseinheiten 80a-c aus den Feldstärkesignalen berechnet wird. Die Signalverarbeitungseinrichtung hat weiterhin geometrische Daten gespeichert, welche die Position des Sägeblatts, dessen räumliche Ausdehnung und weitere, für die Sicherheit relevante geometrische Daten der Werkzeugmaschine selbst beschreiben, gespeichert. Die Signalverarbeitungseinrichtung empfängt weiterhin Maschinendaten, welche eine Bewegung und Position dieses Kreissägeblatts und sonstiger Bauteile beschreiben und ist daher in der Lage, die geometrischen Positionen der relevanten, gefährdenden Bauteile der Werkzeugmaschine genau zu bestimmen. Aus diesen geometrischen Daten der Werkzeugmaschine einerseits und den Positionsdaten der mit den Signalisierungseinheiten ausgerüsteten Körperteilen des Benutzers kann die Signalverarbeitungseirichtung eine Position, eine Geschwindigkeit und eine Beschleunigung der jeweiligen Körperteile in Bezug auf die Bauteile der Werkzeugmaschine und damit einen Abstand zu den gefährdenden Bauteilen ermitteln. Wird hierbei festgestellt, dass dieser Abstand, in Verbindung mit der Bewegungsgeschwindigkeit und der Beschleunigung für eines der Körperteile für die nähere Zukunft einen Kontakt mit den Kreissägeblatt ergeben würde, liegt hierin eine Feststellung einer Gefährdungssituation und die Signalverarbeitungseinrichtung veranlasst die Steuerung der Werkzeugmaschine dazu, eine Maßnahme zur Reduktion dieser Gefährdungssituation zu treffen.

Die Werkzeugmaschine kann hierzu beispielsweise dazu ausgerüstet sein, einen Schnellstopp des Kreissägeblatts durchzuführen, das Kreissägeblatt in kurzer Zeit unter den Tisch zu bewegen oder es können andere Maßnahmen getroffen werden, wie zuvor beschrieben.

Figur 4 zeigt symbolisch eine solche Situation, in der durch die Hand des Benutzers ein Werkstück 100 auf dem Werkzeugschlitten vorgeschoben wird, um einen Sägeschnitt auszuführen. Wie ersichtlich, ist die Hand mit dem Handschuh 90 gemäß Figur 3 ausgerüstet und befindet sich in einem Bereich seitlich und zwischen den Signalempfangseinheiten 80a,b. Die Signalempfangseinheiten 80a,b ermitteln eine präzise Position der Hand und der einzelnen Finger dieser Hand und können daher erkennen, dass dann, wenn der Benutzer die Hand gemeinsam mit dem Werkstück 100 weiter parallel am Kreissägeblatt entlang vorbeiführt, eine Gefährdungssituation vermieden würde. Wird jedoch durch ein Abrutschen der Hand auf dem Werkstück nun eine Bewegung der Hand in Richtung auf das Kreissägeblatt 20 zu erfolgen, würde hierdurch eine Geschwindigkeit und Annäherung an das Kreissägeblatt erfasst werden, die als Gefährdungssituation charakterisiert werden müsste. In diesem Fall wird eine Verletzung der Hand durch Abstoppen des Kreissägeblatts und Absenken des Kreissägeblatts unter die Werkstückauflagefläche vermieden, bevor ein Kontakt zwischen einem Finger oder der Hand des Benutzers und dem Kreissägeblatt auftreten kann.

Wie in Figur 4 weiterhin ersichtlich, ist an dem Werkstück eine zusätzliche Signalisierungseinheit 90w befestigt, die zugleich eine Erfassung der Position und Bewegung des Werkstücks durch die Signalempfangseinheiten 80a,b,c,d ermöglicht und hierdurch einen direkten Abgleich der Bewegung von Hand und Werkstück möglich macht.

Des Weiteren ist an der Unterseite des Schlittens 50 eine zusätzliche Bauteilsignalisierungseinheit 90x befestigt, die eine direkte Erfassung der Position und Bewegungsgeschwindigkeit des Schlittens durch die Sicherheitseinrichtung möglich macht. Diese zusätzlichen Signalisierungseinheiten 90w und 90x erlauben es, unerwünschte und möglicherweise als Gefährdungssituation zu charakterisierende Relativbewegungen zwischen Hand zu Werkstück, Hand zu Schlitten oder Werkstück zu Schlitten direkt zu erfassen und hierdurch direkt eine Gefährdungssituation oder eine Komponente einer Gefährdungssituation zu erfassen.

## Patentansprüche

1. Sicherheitseinrichtung für Werkzeugmaschinen mit einem Bearbeitungswerkzeug (20), das zur Bearbeitung eines der Werkzeugmaschine zugeführten Werkstücks dient, umfassend:
eine Erkennungsvorrichtung (80a-d), die ausgebildet ist, um eine Gefährdungssituation eines Bedieners der Werkzeugmaschine zu erkennen,
eine Gefahrreduktionsvorrichtung, die signaltechnisch mit der Erkennungsvorrichtung verbunden und ausgebildet ist, um bei Erhalt eines Gefährdungssignals von der Erkennungsvorrichtung, das eine Gefährdungssituation des Bedieners signalisiert, eine Maßnahme zur Verringerung der Gefährdungssituation auszuführen,
wobei die Erkennungsvorrichtung
- eine vom Benutzer getragene Signalisierungseinheit (90) und
- eine an der Werkzeugmaschine angeordnete Signalempfangseinrichtung, welche ausgebildet ist, um eine Positionskomponente der Signalisierungseinheit zu erfassen, und
eine elektronische Signalverarbeitungseinrichtung (70), die mit der Signalempfangseinrichtung signaltechnisch verbunden und ausgebildet ist um aus einem von der Signalempfangseinrichtung übermitteltem, die Positionskomponente der Signalisierungseinheit beschreibendem Signal zu ermitteln, ob eine Gefährdungssituation, insbesondere eine Unterschreitung eines vorbestimmten Mindestabstands zwischen einem Körperteil des Benutzers und dem Bearbeitungswerkzeug, vorliegt, und um, wenn ermittelt ist, dass eine solche Gefährdungssituation vorliegt, das Gefährdungssignal an die Gefahrreduktionsvorrichtung zu senden,
**dadurch gekennzeichnet, dass** die Signalverarbeitungseinrichtung ausgebildet ist, um eine Bewegungsgeschwindigkeit des Körperteils zu ermitteln, und
in Abhängigkeit der Bewegungsgeschwindigkeit des Körperteils zu ermitteln, ob eine Gefährdungssituation vorliegt,
und dass die Gefahrreduktionsvorrichtung ausgebildet ist, um das Bearbeitungswerkzeug zu bremsen und/oder in eine Nichtgefährdungssituation zu bewegen.

2. Sicherheitseinrichtung nach Anspruch 1,
**dadurch gekennzeichnet, dass** die Signalisierungseinheit eine passiv arbeitende Einheit ist, die ausgebildet ist, um draht- und berührungslos von der Signalempfangseinrichtung erfasst zu werden.

3. Sicherheitseinrichtung nach einem der vorhergehenden Ansprüche,
**dadurch gekennzeichnet, dass** die elektronische Signalverarbeitungseinrichtung (70) ausgebildet ist, um zu bestimmen, dass die Gefährdungssituation vorliegt, wenn
- das Körperteil in einer aus der Positionskomponente berechneten aktuellen Position des Körperteils weniger als einen Mindestabstand von dem Bearbeitungswerkzeug entfernt ist, oder
- das Körperteil in einer aus der Positionskomponente berechneten aktuellen Position des Körperteils oberhalb des oder im Mindestabstand von dem Bearbeitungswerkzeug entfernt ist und aus einer aus der Änderung von zumindest zwei zeitlich aufeinanderfolgenden Positionskomponenten berechneten aktuellen Bewegung des Körperteils innerhalb einer vorbestimmten Zeitspanne in eine Position bewegen wird, die weniger als der Mindestabstand von dem Bearbeitungswerkzeug entfernt ist.

4. Sicherheitseinrichtung nach einem der vorhergehenden Ansprüche,
**dadurch gekennzeichnet, dass** die Signalempfangseinrichtung ausgebildet ist, um draht- und berührungslos einen Abstand zwischen der Signalisierungseinheit und der Signalempfangseinrichtung zu erfassen.

5. Sicherheitseinrichtung nach einem der vorhergehenden Ansprüche,
**dadurch gekennzeichnet, dass** die Signalempfangseinrichtung ausgebildet ist, um draht- und berührungslos eine sich von der Signalisierungseinheit zu der Signalempfangseinrichtung erstreckende Richtung oder Richtungskomponente zu erfassen.

6. Sicherheitseinrichtung nach einem der vorhergehenden Ansprüche,
**dadurch gekennzeichnet, dass** die Signalverarbeitungseinrichtung ausgebildet ist, um einen Abstand zwischen der Signalisierungseinheit und der Signalempfangseinrichtung und/oder eine sich von der Signalempfangseinrichtung zu der Signalisierungseinheit erstreckende Richtung zu bestimmen, und unter Berücksichtigung dieses Abstands und oder dieser Richtung zu bestimmen, ob eine Gefährdungssituation vorliegt. insbesondere indem die Signalverarbeitungseinrichtung weiterhin ausgebildet ist, um eine vorbestimmte geometrische Konstellation zwischen dem Körperteil des Benutzers und der vom Benutzer getragenen Signalisierungseinheit zu verarbeiten und unter Berücksichtigung dieser geometrischen Konstellation zu bestimmen, ob eine Gefährdungssituation vorliegt.

7. Sicherheitseinrichtung nach einem der vorhergehenden Ansprüche,
**dadurch gekennzeichnet, dass** die Signalisierungseinheit (90a-e) an einem Kleidungsaccessoire angeordnet ist, insbesondere
- an einem Handschuh (90)
- an einem um den Arm getragenen Band, wie einem Armring, Armreif oder Uhrenarmband, oder
- an einem Fingerring,
oder
dass die Signalisierungseinheit in einem Implantat angeordnet ist.

8. Sicherheitseinrichtung nach einem der vorhergehenden Ansprüche,
**dadurch gekennzeichnet, dass** die Signalisierungseinheit eine Dateninformation speichert, die ein Sicherheitskriterium umfasst und die Signalempfangseinrichtung ausgebildet ist, um diese Dateninformation von der Signalisierungseinheit zu empfangen und an die Signalverarbeitungseinrichtung zu leiten und dass die Signalverarbeitungseinrichtung ausgebildet ist, um
- in Abhängigkeit des Sicherheitskriteriums einen vorbestimmten Minimalabstand zwischen Bearbeitungswerkzeug und Körperteil des Benutzers und/oder eine vorbestimmte maximale Bewegungsgeschwindigkeit der Signalisierungseinheit zu bestimmen
- aus einer Positionskomponente einen aktuellen Abstand zwischen Bearbeitungswerkzeug und Körperteil des Benutzers und/oder aus zwei zeitlich aufeinanderfolgenden Positionskomponenten eine aktuelle Bewegungsgeschwindigkeit der Signalisierungseinheit zu bestimmen und
- festzustellen, dass eine Gefährdungssituation vorliegt, wenn der aktuelle Abstand den Minimalabstand unterschreitet und/oder die aktuelle Geschwindigkeit die maximale Bewegungsgeschwindigkeit überschreitet.

9. Sicherheitseinrichtung nach einem der vorhergehenden Ansprüche,
**dadurch gekennzeichnet, dass** die die Signalverarbeitungseinrichtung ausgebildet ist, um eine Beschleunigung des Körperteils zu ermitteln, und in Abhängigkeit der Bewegungsgeschwindigkeit und der Beschleunigung des Körperteils zu ermitteln, ob eine Gefährdungssituation vorliegt.

10. Sicherheitseinrichtung nach einem der vorhergehenden Ansprüche,
**dadurch gekennzeichnet, dass** die Signalverarbeitungseinrichtung ausgebildet ist, um
- einen Bearbeitungsparameter, der einen Betriebsparameter der Werkzeugmaschine charakterisiert, zu empfangen, und
- in Abhängigkeit des Bearbeitungsparameters zu ermitteln, ob eine Gefährdungssituation vorliegt.
wobei vorzugsweise die Signalverarbeitungseinrichtung ausgebildet ist, um anhand des Bearbeitungsparameters eine Plausibilitätsprüfung auszuführen, indem
- einer oder mehrerer Positionskomponenten eine Position, eine Bewegungsrichtung und/oder eine Bewegungsgeschwindigkeit der Signalisierungseinheit ermittelt wird,
- die Position, Bewegungsrichtung und/oder Bewegungsgeschwindigkeit mit einer dem Bearbeitungsparameter zugeordneten, plausiblen Position, Bewegungsrichtung bzw. Bewegungsgeschwindigkeit zu vergleichen, und
- eine Abweichung zwischen der ermittelten Position, Bewegungsrichtung und/oder Bewegungsgeschwindigkeit von der zugeordneten, plausiblen Position, Bewegungsrichtung bzw. Bewegungsgeschwindigkeit zu ermitteln und um in Abhängigkeit dieser Abweichung zu ermitteln, ob eine Gefährdungssituation vorliegt.

11. Sicherheitseinrichtung nach einem der vorhergehenden Ansprüche mit einer zweiten Signalisierungseinheit,
**dadurch gekennzeichnet, dass**
- die Signalisierungseinheit ausgebildet ist, um einen ersten individuellen Identifikationscode an die Empfangseinheit zu senden,
- die zweite Signalisierungseinheit ausgebildet ist, um einen zweiten individuellen Identifikationscode an die Empfangseinheit zu senden,
- die Signalempfangseinrichtung ausgebildet ist, um eine zweite Positionskomponente der zweiten Signalisierungseinheit zu erfassen, und
- die Signalverarbeitungseinheit ausgebildet ist, um aus den von der Signalempfangseinrichtung übermittelten ersten und zweiten individuellen Identifikationscode und einem von der Signalempfangseinrichtung übermitteltem, die zweite Positionskomponente der zweiten Signalisierungseinheit beschreibendem Signal die Signalisierungseinheit einem Körperteil eines ersten Benutzers und die zweite Signalisierungseinheit einem Körperteil eines zweiten Benutzers zuzuordnen und um zu ermitteln, ob eine Gefährdungssituation in Bezug auf den zweiten Benutzer, insbesondere eine Unterschreitung eines vorbestimmten Mindestabstands zwischen dem Körperteil des zweiten Benutzers und dem Bearbeitungswerkzeug, vorliegt und um, wenn ermittelt ist, dass eine solche Gefährdungssituation vorliegt, das Gefährdungssignal an die Gefahrreduktionsvorrichtung zu senden,
wobei die Signalverarbeitungseinheit vorzugsweise ausgebildet ist, um
- zur Ermittlung, ob eine Gefährdungssituation in Bezug auf den Benutzer vorliegt, ein erstes Beurteilungskriterium anzuwenden,
- zur Ermittlung, ob eine Gefährdungssituation in Bezug auf den zweiten Benutzer vorliegt, ein zweites Beurteilungskriterium anzuwenden,
- wobei das erste Beurteilungskriterium vorzugsweise verschieden ist von dem zweiten Beurteilungskriterium.

12. Sicherheitseinrichtung nach einem der vorhergehenden Ansprüche,
**gekennzeichnet durch**
- eine Bauteilsignalisierungseinheit, die an einem beweglichen Bauteil oder Werkzeug der Werkzeugmaschine befestigt ist, wobei die Signalempfangseinrichtung ausgebildet ist, um einen Abstand von und/oder eine Richtung zu der Bauteilsignalisierungseinheit zu erfassen und die Signalverarbeitungseinheit ausgebildet ist, um aus einem von der Signalempfangseinrichtung übermitteltem, eine Positionskomponente der Bauteilsignalisierungseinheit beschreibendem Signal eine Positionskomponente des beweglichen Bauteils zu bestimmen und um in Abhängigkeit der Positionskomponente des Bauteils zu ermitteln, ob eine Gefährdungssituation vorliegt, und oder
- eine Werkstücksignalisierungseinheit, die an einem mit der Werkzeugmaschine bearbeiteten Werkstück befestigt ist, wobei die Signalempfangseinrichtung ausgebildet ist, um einen Abstand von und/oder eine Richtung zu der Werkstücksignalisierungseinheit zu erfassen und die Signalverarbeitungseinheit ausgebildet ist, um aus einem von der Signalempfangseinrichtung übermitteltem, eine Positionskomponente der Werkstücksignalisierungseinheit beschreibendem Signal eine Positionskomponente des Werkstücks zu bestimmen und um in Abhängigkeit der Positionskomponente des Bauteils zu ermitteln, ob eine Gefährdungssituation vorliegt.
wobei die Signalverarbeitungseinrichtung vorzugsweise ausgebildet ist, um
- ein Benutzerbewegungsmuster einer vom Benutzer getragene Signalisierungseinheit zu bestimmen und
- ein Bauteilbewegungsmuster bzw. Werkstückbewegungsmuster einer am Bauteil befestigten Bauteilsignalisierungseinheit bzw. einer am Werkstück befestigten Werkstücksignalisierungseinheit zu bestimmen,
- das Benutzerbewegungsmuster mit dem Bauteilbewegungsmuster bzw. dem Werkstückbewegungsmuster zu vergleichen, und
- eine Abweichung zwischen dem Benutzerbewegungsmuster und dem Bauteil- bzw. Werkstückbewegungsmuster, zu bestimmen und in Abhängigkeit dieser Abweichung zu ermitteln, ob eine Gefährdungssituation vorliegt,

13. Sicherheitseinrichtung nach einem der vorhergehenden Ansprüche,
**dadurch gekennzeichnet, dass** die Signalisierungseinheit einen Handschuh umfasst, insbesondere durch einen Handschuh gebildet wird, und dass die Signalempfangseinrichtung ausgebildet ist, um eine Farbe, Textur, Lichtreflexeigenschaft oder einen Hell-Dunkel-Wert des Handschuhs zu empfangen und auszuwerten und um anhand der Farbe, Textur, Lichtreflexeigenschaft oder dem Hell-Dunkel-Wert die Positionskomponente der Signalisierungseinheit zu erfassen.

14. Sicherheitseinrichtung nach einem der vorhergehenden Ansprüche,
**dadurch gekennzeichnet, dass** die Signalempfangseinrichtung eine Bilderfassungsvorrichtung, insbesondere eine Bewegtbilderfassungsvorrichtung wie eine im sichtbaren Lichtspektrum oder im Infrarotspektrum aufnehmende Videokamera ist.

15. Verfahren zum Betreiben einer Werkzeugmaschine, mit den Schritten:
- Anordnen einer Signalisierungseinheit (90) an einem Körperteil eines Benutzers,
- Erfassen einer Position und einer Geschwindigkeit und vorzugsweise weiterhin einer Beschleunigung der Signalisierungseinheit mittels einer an der Werkzeugmaschine angeordneten Signalempfangseinrichtung,
- Ermitteln anhand der erfassten Position und der Geschwindigkeit und vorzugsweise weiterhin der Beschleunigung, ob das Körperteil des Benutzers einer Gefährdungssituation ausgesetzt ist,
Reduzieren oder Vermeiden der Gefährdungssituation mittels einer durch eine Gefahrreduktionsmaßnahme an der Werkzeugmaschine, wenn eine Gefährdungssituation ermittelt wurde, indem ein Bearbeitungswerkzeug gebremst und/oder in eine Nichtgefährdungssituation bewegt wird.

## Claims

1. Safety device for machine tools comprising a processing tool (20) which serves to process a workpiece supplied to the machine tool, comprising:
a detection device (80a-d) configured to detect a hazardous situation of an operator of the machine tool,
a hazard reduction device which is connected in terms of signal technology to the detection device and configured, upon receipt of a hazard signal from the detection device signalling a hazardous situation of the operator, to carry out a measure for reducing the hazardous situation,
wherein the detection device comprises
- a signalling unit (90) worn by the user, and
- a signal receiving device arranged on the machine tool, which is configured to detect a position component of the signalling unit, and
an electronic signal processing device (70) which is connected in terms of signal technology to the signal receiving device and configured to determine, from a signal transmitted by the signal receiving device and describing the position component of the signalling unit, whether a hazardous situation, in particular a distance between a body part of the user and the processing tool falling below a predetermined minimum distance, is present, and to send the hazard signal to the hazard reduction device if it is determined that such a hazardous situation is present,
**characterised in that** the signal processing device is configured to determine a movement speed of the body part, and to determine, depending on the movement speed of the body part, whether a hazardous situation is present,
and **in that** the hazard reduction device is configured to brake the processing tool and/or to move it into a non-hazardous situation.

2. Safety device according to claim 1, **characterised in that** the signalling unit is a passively operating unit which is configured to be detected wirelessly and contactlessly by the signal receiving device.

3. Safety device according to any one of the preceding claims, **characterised in that** the electronic signal processing device (70) is configured to determine that the hazardous situation is present when
- the body part is less than a minimum distance away from the processing tool in a current position of the body part calculated from the position component, or
- the body part is above or at the minimum distance away from the processing tool in a current position of the body part calculated from the position component and will move, within a predetermined time period, into a position that is less than the minimum distance away from the processing tool, based on a current movement of the body part calculated from the change of at least two temporally successive position components.

4. Safety device according to any one of the preceding claims, **characterised in that** the signal receiving device is configured to detect wirelessly and contactlessly a distance between the signalling unit and the signal receiving device.

5. Safety device according to any one of the preceding claims, **characterised in that** the signal receiving device is configured to detect, wirelessly and contactlessly, a direction or directional component extending from the signalling unit to the signal receiving device.

6. Safety device according to any one of the preceding claims, **characterised in that** the signal processing device is configured to determine a distance between the signalling unit and the signal receiving device and/or a direction extending from the signal receiving device to the signalling unit, and to determine, taking into account this distance and/or this direction, whether a hazardous situation is present. In particular **in that** the signal processing device is further configured to process a predetermined geometric constellation between the body part of the user and the signalling unit worn by the user and to determine, taking into account this geometric constellation, whether a hazardous situation is present.

7. Safety device according to any one of the preceding claims, **characterised in that** the signalling unit (90a-e) is arranged on a clothing accessory, in particular
- on a glove (90)
- on a band worn around the arm, such as an armband, bangle or watch strap, or
- on a finger ring,
or **in that** the signalling unit is arranged in an implant.

8. Safety device according to any one of the preceding claims, **characterised in that** the signalling unit stores data information comprising a safety criterion, and the signal receiving device is configured to receive this data information from the signalling unit and to forward it to the signal processing device, and **in that** the signal processing device is configured to
- determine, depending on the safety criterion, a predetermined minimal distance between the processing tool and the body part of the user and/or a predetermined maximum movement speed of the signalling unit
- determine, from a position component, a current distance between the processing tool and the body part of the user and/or, from two temporally successive position components, a current movement speed of the signalling unit, and
- determine that a hazardous situation is present when the current distance falls below the minimal distance and/or the current speed exceeds the maximum movement speed.

9. Safety device according to any one of the preceding claims, **characterised in that** the signal processing device is configured to determine an acceleration of the body part, and to determine, depending on the movement speed and the acceleration of the body part, whether a hazardous situation is present.

10. Safety device according to any one of the preceding claims, **characterised in that** the signal processing device is configured to
- receive a processing parameter characterising an operating parameter of the machine tool, and
- determine, depending on the processing parameter, whether a hazardous situation is present,
wherein preferably the signal processing device is configured to carry out a plausibility check on the basis of the processing parameter by
- determining a position, a movement direction and/or a movement speed of the signalling unit from one or more position components,
- comparing the position, movement direction and/or movement speed with a plausible position, movement direction or movement speed associated with the processing parameter, and
- determining a deviation between the determined position, movement direction and/or movement speed and the associated plausible position, movement direction or movement speed, and determining, depending on this deviation, whether a hazardous situation is present.

11. Safety device according to any one of the preceding claims, having a second signalling unit, **characterised in that**
- the signalling unit is configured to send a first individual identification code to the receiving unit,
- the second signalling unit is configured to send a second individual identification code to the receiving unit,
- the signal receiving device is configured to detect a second position component of the second signalling unit, and
- the signal processing unit is configured to associate, from the first and second individual identification codes transmitted by the signal receiving device and a signal transmitted by the signal receiving device describing the second position component of the second signalling unit, the signalling unit with a body part of a first user and the second signalling unit with a body part of a second user, and to determine whether a hazardous situation exists in relation to the second user, in particular a distance between the body part of the second user and the processing tool falling below a predetermined minimum distance, and to send the hazard signal to the hazard reduction device if it is determined that such a hazardous situation is present,
wherein the signal processing unit is preferably configured to
- apply a first assessment criterion in order to determine whether a hazardous situation in relation to the user is present,
- apply a second assessment criterion in order to determine whether a hazardous situation in relation to the second user is present,
- wherein the first assessment criterion is preferably different from the second assessment criterion.

12. Safety device according to any one of the preceding claims, **characterised by**
- a component signalling unit fastened to a movable component or tool of the machine tool, wherein the signal receiving device is configured to detect a distance from and/or a direction to the component signalling unit, and the signal processing unit is configured to determine a position component of the movable component from a signal transmitted by the signal receiving device and describing a position component of the component signalling unit, and to determine, depending on the position component of the component, whether a hazardous situation is present, and/or
- a workpiece signalling unit fastened to a workpiece processed by the machine tool, wherein the signal receiving device is configured to detect a distance from and/or a direction to the workpiece signalling unit, and the signal processing unit is configured to determine a position component of the workpiece from a signal transmitted by the signal receiving device and describing a position component of the workpiece signalling unit, and to determine, depending on the position component of the component, whether a hazardous situation is present,
wherein the signal processing device is preferably configured to
- determine a user movement pattern of a signalling unit worn by the user, and
- determine a component movement pattern or workpiece movement pattern of a component signalling unit fastened to the component or of a workpiece signalling unit fastened to the workpiece,
- compare the user movement pattern with the component movement pattern or the workpiece movement pattern, and
- determine a deviation between the user movement pattern and the component movement pattern or workpiece movement pattern, and determine, depending on this deviation, whether a hazardous situation is present.

13. Safety device according to any one of the preceding claims, **characterised in that** the signalling unit comprises a glove, in particular is formed by a glove, and **in that** the signal receiving device is configured to receive and evaluate a colour, texture, light reflection property or light-dark value of the glove, and to detect the position component of the signalling unit on the basis of the colour, texture, light reflection property or light-dark value.

14. Safety device according to any one of the preceding claims, **characterised in that** the signal receiving device is an image capturing device, in particular a moving image capturing device such as a video camera recording in the visible light spectrum or in the infrared spectrum.

15. Method for operating a machine tool, comprising the steps of:
- arranging a signalling unit (90) on a body part of a user,
- detecting a position and a speed, and preferably further an acceleration, of the signalling unit by means of a signal receiving device arranged on the machine tool,
- determining, on the basis of the detected position and speed, and preferably further the acceleration, whether the body part of the user is exposed to a hazardous situation,
reducing or avoiding the hazardous situation by means of a hazard reduction measure at the machine tool, if a hazardous situation is determined, by braking a processing tool and/or moving it into a non-hazardous situation.

## Revendications

1. Dispositif de sécurité pour machines-outils comportant un outil d'usinage (20) servant à usiner une pièce amenée à la machine-outil, comprenant :
un dispositif de détection (80a-d) conçu pour détecter une situation de danger d'un opérateur de la machine-outil,
un dispositif de réduction du danger qui est relié sur le plan de la signalisation au dispositif de détection et conçu pour exécuter, lors de la réception d'un signal de danger provenant du dispositif de détection signalant une situation de danger de l'opérateur, une mesure de réduction de la situation de danger,
le dispositif de détection comprenant
- une unité de signalisation (90) portée par l'utilisateur, et
- un dispositif de réception de signal disposé sur la machine-outil, conçu pour détecter une composante de position de l'unité de signalisation, et
un dispositif électronique de traitement de signal (70) relié sur le plan de la signalisation au dispositif de réception de signal et conçu pour déterminer, à partir d'un signal transmis par le dispositif de réception de signal et décrivant la composante de position de l'unité de signalisation, si une situation de danger, en particulier un franchissement par le bas d'une distance minimale prédéterminée entre une partie du corps de l'utilisateur et l'outil d'usinage, est présente, et pour envoyer, lorsqu'il est déterminé qu'une telle situation de danger est présente, le signal de danger au dispositif de réduction du danger,
**caractérisé en ce que** le dispositif de traitement de signal est conçu pour déterminer une vitesse de déplacement de la partie du corps, et pour déterminer, en fonction de la vitesse de déplacement de la partie du corps, si une situation de danger est présente,
et **en ce que** le dispositif de réduction du danger est conçu pour freiner l'outil d'usinage et/ou pour le déplacer dans une situation non dangereuse.

2. Dispositif de sécurité selon la revendication 1, **caractérisé en ce que** l'unité de signalisation est une unité fonctionnant de manière passive, conçue pour être détectée sans fil et sans contact par le dispositif de réception de signal.

3. Dispositif de sécurité selon l'une des revendications précédentes, **caractérisé en ce que** le dispositif électronique de traitement de signal (70) est conçu pour déterminer que la situation de danger est présente lorsque
- la partie du corps se trouve, dans une position actuelle de la partie du corps calculée à partir de la composante de position, à une distance inférieure à une distance minimale de l'outil d'usinage, ou
- la partie du corps se trouve, dans une position actuelle de la partie du corps calculée à partir de la composante de position, au-dessus de la distance minimale ou à cette distance minimale de l'outil d'usinage, et se déplacera, dans un délai prédéterminé, vers une position se trouvant à une distance inférieure à la distance minimale de l'outil d'usinage, sur la base d'un mouvement actuel de la partie du corps calculé à partir de la variation d'au moins deux composantes de position temporellement successives.

4. Dispositif de sécurité selon l'une des revendications précédentes, **caractérisé en ce que** le dispositif de réception de signal est conçu pour détecter, sans fil et sans contact, une distance entre l'unité de signalisation et le dispositif de réception de signal.

5. Dispositif de sécurité selon l'une des revendications précédentes, **caractérisé en ce que** le dispositif de réception de signal est conçu pour détecter, sans fil et sans contact, une direction ou une composante directionnelle s'étendant de l'unité de signalisation vers le dispositif de réception de signal.

6. Dispositif de sécurité selon l'une des revendications précédentes, **caractérisé en ce que** le dispositif de traitement de signal est conçu pour déterminer une distance entre l'unité de signalisation et le dispositif de réception de signal et/ou une direction s'étendant du dispositif de réception de signal vers l'unité de signalisation, et pour déterminer, en tenant compte de cette distance et/ou de cette direction, si une situation de danger est présente. En particulier **en ce que** le dispositif de traitement de signal est en outre conçu pour traiter une configuration géométrique prédéterminée entre la partie du corps de l'utilisateur et l'unité de signalisation portée par l'utilisateur et pour déterminer, en tenant compte de cette configuration géométrique, si une situation de danger est présente.

7. Dispositif de sécurité selon l'une des revendications précédentes, **caractérisé en ce que** l'unité de signalisation (90a-e) est disposée sur un accessoire vestimentaire, en particulier
- sur un gant (90)
- sur un bracelet porté autour du bras, tel qu'un bracelet, un bracelet-jonc ou un bracelet-montre, ou
- sur une bague,
ou **en ce que** l'unité de signalisation est disposée dans un implant.

8. Dispositif de sécurité selon l'une des revendications précédentes, **caractérisé en ce que** l'unité de signalisation stocke une information de données comprenant un critère de sécurité, et le dispositif de réception de signal est conçu pour recevoir cette information de données provenant de l'unité de signalisation et pour la transmettre au dispositif de traitement de signal, et **en ce que** le dispositif de traitement de signal est conçu pour
- déterminer, en fonction du critère de sécurité, une distance minimale prédéterminée entre l'outil d'usinage et la partie du corps de l'utilisateur et/ou une vitesse de déplacement maximale prédéterminée de l'unité de signalisation
- déterminer, à partir d'une composante de position, une distance actuelle entre l'outil d'usinage et la partie du corps de l'utilisateur et/ou, à partir de deux composantes de position temporellement successives, une vitesse de déplacement actuelle de l'unité de signalisation, et
- déterminer qu'une situation de danger est présente lorsque la distance actuelle est inférieure à la distance minimale et/ou lorsque la vitesse actuelle est supérieure à la vitesse de déplacement maximale.

9. Dispositif de sécurité selon l'une des revendications précédentes, **caractérisé en ce que** le dispositif de traitement de signal est conçu pour déterminer une accélération de la partie du corps, et pour déterminer, en fonction de la vitesse de déplacement et de l'accélération de la partie du corps, si une situation de danger est présente.

10. Dispositif de sécurité selon l'une des revendications précédentes, **caractérisé en ce que** le dispositif de traitement de signal est conçu pour
- recevoir un paramètre d'usinage caractérisant un paramètre de fonctionnement de la machine-outil, et
- déterminer, en fonction du paramètre d'usinage, si une situation de danger est présente,
le dispositif de traitement de signal étant de préférence conçu pour effectuer un contrôle de plausibilité à l'aide du paramètre d'usinage, en
- déterminant, à partir d'une ou plusieurs composantes de position, une position, une direction de déplacement et/ou une vitesse de déplacement de l'unité de signalisation,
- comparant la position, la direction de déplacement et/ou la vitesse de déplacement à une position, une direction de déplacement ou une vitesse de déplacement plausible associée au paramètre d'usinage, et
- déterminant un écart entre la position, la direction de déplacement et/ou la vitesse de déplacement déterminée et la position, la direction de déplacement ou la vitesse de déplacement plausible associée, et en déterminant, en fonction de cet écart, si une situation de danger est présente.

11. Dispositif de sécurité selon l'une des revendications précédentes, comportant une deuxième unité de signalisation, **caractérisé en ce que**
- l'unité de signalisation est conçue pour envoyer un premier code d'identification individuel à l'unité de réception,
- la deuxième unité de signalisation est conçue pour envoyer un deuxième code d'identification individuel à l'unité de réception,
- le dispositif de réception de signal est conçu pour détecter une deuxième composante de position de la deuxième unité de signalisation, et
- l'unité de traitement de signal est conçue pour attribuer, à partir des premier et deuxième codes d'identification individuels transmis par le dispositif de réception de signal et d'un signal transmis par le dispositif de réception de signal décrivant la deuxième composante de position de la deuxième unité de signalisation, l'unité de signalisation à une partie du corps d'un premier utilisateur et la deuxième unité de signalisation à une partie du corps d'un deuxième utilisateur, et pour déterminer si une situation de danger existe par rapport au deuxième utilisateur, en particulier un franchissement par le bas d'une distance minimale prédéterminée entre la partie du corps du deuxième utilisateur et l'outil d'usinage, et pour envoyer, lorsqu'il est déterminé qu'une telle situation de danger est présente, le signal de danger au dispositif de réduction du danger,
l'unité de traitement de signal étant de préférence conçue pour
- appliquer un premier critère d'évaluation pour déterminer si une situation de danger existe par rapport à l'utilisateur,
- appliquer un deuxième critère d'évaluation pour déterminer si une situation de danger existe par rapport au deuxième utilisateur,
- le premier critère d'évaluation étant de préférence différent du deuxième critère d'évaluation.

12. Dispositif de sécurité selon l'une des revendications précédentes, **caractérisé par**
- une unité de signalisation de composant fixée à un composant mobile ou à un outil mobile de la machine-outil, le dispositif de réception de signal étant conçu pour détecter une distance par rapport à l'unité de signalisation de composant et/ou une direction vers celle-ci, et l'unité de traitement de signal étant conçue pour déterminer une composante de position du composant mobile à partir d'un signal transmis par le dispositif de réception de signal et décrivant une composante de position de l'unité de signalisation de composant, et pour déterminer, en fonction de la composante de position du composant, si une situation de danger est présente, et/ou
- une unité de signalisation de pièce fixée à une pièce usinée par la machine-outil, le dispositif de réception de signal étant conçu pour détecter une distance par rapport à l'unité de signalisation de pièce et/ou une direction vers celle-ci, et l'unité de traitement de signal étant conçue pour déterminer une composante de position de la pièce à partir d'un signal transmis par le dispositif de réception de signal et décrivant une composante de position de l'unité de signalisation de pièce, et pour déterminer, en fonction de la composante de position du composant, si une situation de danger est présente,
le dispositif de traitement de signal étant de préférence conçu pour
- déterminer un modèle de déplacement de l'utilisateur d'une unité de signalisation portée par l'utilisateur, et
- déterminer un modèle de déplacement du composant ou un modèle de déplacement de la pièce d'une unité de signalisation de composant fixée au composant ou d'une unité de signalisation de pièce fixée à la pièce,
- comparer le modèle de déplacement de l'utilisateur au modèle de déplacement du composant ou au modèle de déplacement de la pièce, et
- déterminer un écart entre le modèle de déplacement de l'utilisateur et le modèle de déplacement du composant ou de la pièce, et déterminer, en fonction de cet écart, si une situation de danger est présente.

13. Dispositif de sécurité selon l'une des revendications précédentes, **caractérisé en ce que** l'unité de signalisation comprend un gant, en particulier est constituée d'un gant, et **en ce que** le dispositif de réception de signal est conçu pour recevoir et évaluer une couleur, une texture, une propriété de réflexion de la lumière ou une valeur de contraste clair-obscur du gant, et pour détecter la composante de position de l'unité de signalisation sur la base de la couleur, de la texture, de la propriété de réflexion de la lumière ou de la valeur de contraste clair-obscur.

14. Dispositif de sécurité selon l'une des revendications précédentes, **caractérisé en ce que** le dispositif de réception de signal est un dispositif de capture d'image, en particulier un dispositif de capture d'image en mouvement tel qu'une caméra vidéo enregistrant dans le spectre de la lumière visible ou dans le spectre infrarouge.

15. Procédé d'utilisation d'une machine-outil, comprenant les étapes suivantes :
- disposer une unité de signalisation (90) sur une partie du corps d'un utilisateur,
- détecter une position et une vitesse, et de préférence en outre une accélération, de l'unité de signalisation au moyen d'un dispositif de réception de signal disposé sur la machine-outil,
- déterminer, sur la base de la position et de la vitesse détectées, et de préférence en outre de l'accélération, si la partie du corps de l'utilisateur est exposée à une situation de danger,
réduire ou éviter la situation de danger au moyen d'une mesure de réduction du danger sur la machine-outil, lorsqu'une situation de danger a été déterminée, en freinant un outil d'usinage et/ou en le déplaçant dans une situation non dangereuse.
